(19) Europäisches Patentamt
European Patent Office
Office européen des brevets

(11) **EP 4 303 764 A1**

(12) **EUROPEAN PATENT APPLICATION**

(43) Date of publication:
**10.01.2024 Bulletin 2024/02**

(21) Application number: **22183516.8**

(22) Date of filing: **07.07.2022**

(51) International Patent Classification (IPC):
**G06N 3/02** *(2006.01)*    **G06N 3/08** *(2023.01)*
**G06N 3/04** *(2023.01)*    **G06N 20/00** *(2019.01)*

(52) Cooperative Patent Classification (CPC):
**G06N 3/04; G06N 3/045; G06N 3/084; G06N 20/00**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Aktiengesellschaft**
**80333 München (DE)**

(72) Inventors:
• **Gross, Ralf**
  **90471 Nürnberg (DE)**
• **Thon, Ingo**
  **85630 Grasbrunn (DE)**

(74) Representative: **Siemens Patent Attorneys**
**Postfach 22 16 34**
**80506 München (DE)**

(54) **A COMPUTER PROGRAM PRODUCT FOR ANALYZING DATA ORIGINATING FROM AT LEAST ONE DEVICE**

(57)    The present invention relates to a computer program product (100, 400) for analyzing data originating from at least one device (360), the computer program product (100, 400) comprising
- a ML-artifact (120, 500) comprising the functionality of a ML-model, and
- a monitoring-artifact (130, 140, 600),
whereas the ML-model has been trained and/or set up, or can be trained and/or set up, with a machine learning method, whereas the ML-artifact (120, 500) is designed and setup to produce a ML-result (122, 590) as a response of inputting input-data (102, 402, 552), based on data originating from the device (360), into the ML-artifact (120, 500),
whereas the monitoring-artifact (130, 140, 600) is designed and set up to produce a ML-result-reliability-information (132, 142, 690) regarding the ML-result (122, 590) as a response of inputting the input-data (102, 402, 552) into the monitoring-artifact (130, 140, 600),
and whereas the computer program product (100, 400) is further designed and setup to output a qualified-ML-result (190, 702, 704, 706) based on the ML-result (122, 590) and the ML-result-reliability-information (132, 142, 690) when being executed by a computer (300, 400).

FIG 4

## Description

The present invention relates to a computer program product and a computer implemented method for producing a qualified output of a ML-model (ML: Machine Learning) based on input-data originating from a device, whereas the ML-model has been trained and/or set up, or can be trained and/or set up, with a machine learning method.

Such computer program products and methods are known from the prior art.

E.g., the US patent US 10,504,020 B2 discloses classifiers based on neural networks for example to e.g., recognizing parts and assigning according part numbers to them. Further the US patent discloses, that a confidence value may be assigned to each prediction of the classifier, such as the part numbers predicted by the matching-engine-classifier in the use case named above.

It is a disadvantage of the prior art described above, that neither method nor a systematic way for generating a confidence or reliability information regarding a result of a neural network analysis is disclosed.

Therefore, it is a task of the present invention to provide a system and/or method for systematically and/or efficiently generate a confidence-, resilience- and/or reliability-information concerning results created by artificial intelligence methods.

This task is solved by a computer program product with the features of claim 1.

Such a computer program product is designed and set up for analyzing data originating from at least one device, whereas the computer program product comprises:

- a ML-artifact comprising the functionality of a ML-model, and
- a monitoring-artifact,

whereas the ML-model has been trained and/or set up with a machine learning method, or can be trained and/or set up with a machine learning method.

The ML-artifact is designed and setup to produce a ML-result as a response of inputting input-data into the ML-artifact, whereas the input-data is based on data originating from the at least one device, and the monitoring-artifact is designed and set up to produce a ML-result-reliability-information regarding the ML-result as a response of inputting the input-data into the monitoring-artifact.

The computer program product is further designed and setup to output a qualified-ML-result based on the ML-result and the ML-result-reliability-information when being executed by a computer.

This invention integrates the monitoring-artifact together with the ML-artifact (ML: machine learning) in one computer program product, resulting in a single computer program product for both, ML-artifact- or ML-model-inference and monitoring of such inference. In a preferred embodiment, two or more monitoring artifacts according to the present description can be integrated with the ML-artifact in one computer program product, resulting in a single computer program product for both, ML-artifact- or ML-model-inference and monitoring of such inference using the two or more monitoring artifacts.

The computer program product comprises the operations necessary to calculate the output of the ML-artifact or ML-model. The architecture of the ML-model or ML-artifact is extended by additional data processing streams, parallel to the original ML-artifact or ML-model architecture. These parallel streams do not influence the training or inference results considering the original ML task that is approached. Thereby, the core component for predicting the values required by the business logic (inference results) can remain unchanged. However, by integrating the data processing streams for monitoring into the computer program product, access to relevant aspects for the monitoring is given (input data, the internal data flow and intermediate data representations within the original ML-model or ML-artifact as well as the inference results).

Integration of monitoring-artifact into the computer program product together with the ML-artifact solves the task named above, among others, for the following reasons:

- Monitoring data streams, meaning e.g. the monitoring-artifact, can be directly configured and/or trained based on the data on which the ML-model or ML-artifact to be monitored is trained. Thereby, when updating the ML-model or ML-artifact by retraining it with new data, also the monitoring components, e.g. the monitoring artifact, can be updated.
- No additional code is required for monitoring. Only the qualified-ML-result must be considered for further processing, e.g., for the communication to other systems. Thereby, also the consistency between different environments is ensured (if the consistency of the model behavior itself is ensured, which is in general necessary for the successful deployment & operation).
- New monitoring methods can be written in form of additional data processing streams, e.g. additional monitoring-artifacts, in the computer program product and can, thereby, efficiently be incorporated into respective libraries.

A computer program product can for example be any kind of computer software comprising instructions, computer software code, computer software instructions, program instructions and/or program code. A computer program product can for example comprise so-called source code and/or comprise so-called "binaries", whereas binaries can be designed and set up as the code which results from a compilation of according source code.

The computer program product can be any implementation of a computer software stored on any kind of electronic device or other device designed and set up or storing computer software, computer software code and/or computer software instructions. Devices for storing a computer program product can be for example electronic memory, for example a so-called read-only memory (ROM), a so-called random access memory (RAM) and/or other comparable electronic memories like EPROMs or the like. Such memories can be semiconductor-based or be designed and set up as magnetic devices, like a hard disk, or other memories for storing electronic data known from the prior art.

The computer program product can for example comprise the ML-artifact and the monitoring-artifact including all their components. The computer program product can for example comprise the components of the ML-artifact and the components of the monitoring-artifact which are necessary for inference.

The computer program product can for example comprise only those components of the ML-artifact and only those components of the monitoring-artifact which are necessary for inference, respectively.

The computer program product can also comprise the ML-artifact and the monitoring-artifact in a way, that a compilation, optimization and/or combination process is used to combine the ML-artifact and the monitoring-artifact to receive the computer program product. Such optimization, compilation and/or combination of the monitoring-artifact and the ML-artifact can be designed and set up according to the present description. Such optimization, compilation and/or combination of the monitoring-artifact and the ML-artifact can for example be designed and set up in a way, that the computer program product comprises components of the ML-artifact and the monitoring-artifact necessary for inference. In a preferred embodiment thereof, the computer program product can e.g. only comprise those components of the ML-artifact and the monitoring-artifact which are necessary for inference. Such optimization, compilation and/or combination of the monitoring-artifact and the ML-artifact can for example be also designed and set up in a way, that the computer program product comprises components of the ML-artifact and the monitoring-artifact necessary for inference and training and/or set up of the ML-artifact and monitoring-artifact, respectively.

The device can be designed and set up as any kind of electronic device being able to communicate data to other electronic devices. It can be e.g. designed as a sensor for detecting physical, chemical and/or other properties and/or conditions. The device can e.g. also comprise a sensor for detecting physical, chemical and/or other properties and/or conditions.

The device can for example be designed and set up as the temperature sensor, a pressure sensor, an optical sensor, a camera, a position sensor, and/or other comparable sensors - or can comprise such a sensor.

The device can for example comprise a sensor according to the present description and a communication component for communicating data from and/or to the device via a wired and/or wireless communication connection.

The input-data can for example be the data originating from the at least one device. The input-data can for example be directly the data originating from the at least one device. The input-data can for example also be designed and set up as data resulting from one or more processing steps performed on the data originating from the at least one device.

Such one or more processing steps can for example comprise a so-called preprocessing for preparation of the data originating from the at least one device to input-data for input into the ML-artifact and/or the monitoring-artifact. Such preprocessing can comprise for example a removal of unusable data, a normalization of the data, a noise-reduction of the data, a completion of the data, a restructuring of the data and/or comparable processing steps. In the case, in which such data originating from the at least one device is image data, the preprocessing can comprise all kinds of image processing. This can comprise e.g. also a modification of the image resolution or color scheme, or a vectorization of the image data.

The input-data can also be other kinds of data based on the data originating from the at least one device, e.g. data received by any kind of transformation, databases, internet searches, or the like.

An artifact, as used within this description, is understood to be a so-called software artifact. Software artifacts are used e.g. within software development and can e.g. be code-elements used for creating a software or during the creation of the software, code-elements being, at least in part, part of the software and/or code-elements resulting in a special functionality when run on a computer. Such functionality can be integrated into the software by using the code-elements during creation of the software.

Software artifacts are typically created during the software development process and can refer to specific methods or processes in the software's development. For example, a software build can contain a developer's code as well as a range of different artifacts. Some of these artifacts can explain how the software works, while others can enable the software to run or represent one or more functionalities of the software. For example, the code's artifacts might include dependencies, project source code or a list of resources. These artifacts can be stored in a repository, so they can be kept organized and retrieved upon demand.

Software artifacts according to the present description can e.g. include the following: Source code, prototypes (fully functioning versions of software helping to build a basic functioning version of their project), data models, design documents, scripts, Unified Modeling Languages (UML) and work products. Software artifacts according to the present description can e.g. also be so-called "code-related artifacts" or "code artifacts". Such code-related artifacts can act as the foundation for the software and/or enable the developer to test the software before launching it. Code-related artifacts can include e.g. source code, compiled code, setup scripts, test suites, generated objects and logs generated during testing and quality assurance.

An artifact in the Unified Modeling Language (UML) is the specification of a physical piece of information that is used or produced by a software development process, or by deployment and operation of a system. Examples of artifacts include model files, source code files, scripts, and binary executable files, a table in a database system, a development deliverable, a word-processing document, or a mail message. Artifacts are the physical entities that are deployed on Nodes (i.e. Devices and Execution Environments). Other UML elements such as classes and components are first manifested into artifacts and instances of these artifacts are then deployed. Artifacts can also be composed of other artifacts.

Best practices surrounding software artifacts include using a repository to store software artifacts, as well as properly managing and maintaining it.

The ML-artifact can be designed and set up as a ML-functionality, a ML-software-application and/or a ML-software-component. The ML-artifact can further be designed and set up to realize a ML-functionality when executed by a computer. Such ML-functionality can e.g. comprise an inference and/or a training and/or set-up functionality.

The ML-artifact (ML: machine learning) can be designed and set up as software code, e.g. source code or binary code, being at least part of the computer program product or being used during the creation of the computer program product.

That the ML-artifact comprises the functionality of a ML-model can further be designed and set up, that the ML-artifact is designed and set up as software code, e.g. source code or binary code, representing, at least among others, the functionality of a trained or untrained ML-model when being executed by a computer.

The ML-artifact can e.g. be designed and set up, that it comprises the ML-model.

That the computer program product comprises the ML-artifact can be designed and set up in a way, that e.g. the computer program product comprises at least one or more parts of the source code or binary code of the ML-artifact. It can also be designed and set up in a way, that the computer program product contains a compiled and/or optimized version of at least one or more parts of the source code or binary code of the ML-artifact. That the computer program product comprises the ML-artifact can be designed and set up in a way, that the ML-artifact is used for the creation of the computer program product in a way, that the computer program product comprises the functionality of a trained or untrained ML-model.

That the computer program product comprises the ML-artifact can be designed and set up in a way, that e.g. the computer program product comprises a compiled and/or optimized version of at least one or more parts of the ML-artifact. The compilation and/or optimization can be designed and set up in a way, that the compiled or uncompiled parts and/or functionalities of the ML-artifact contained in the computer program product are optimized for inference. This can be done by compilations and/or optimizations known in the prior art, e.g. by leaving out parts of the ML-artifact not used for inference. Such parts can e.g. be parts e.g. only used for training and/or set up of the ML-artifact or ML-model. The compilation and/or optimization can also be designed and set up in a way, that the compiled or uncompiled parts and/or functionalities of the ML-artifact contained in the computer program product are optimized for inference and training.

The ML-artifact can be software code in any software computer language or controller programming language, e.g. Python, C, C+, C++, a programming language according the standard IEC 61131 or the like - or be a compiled version of such software code.

The ML-artifact can be designed and set up e.g. as a so called "computational graph". This can e.g. be designed and set up in a way, that the ML-artifact comprises software code representing the structure of a computational graph or consists of such software code.

The development of AI by means of ML-models regularly relies on a static extract of historical data from the environment in which the ML model should be utilized later. The underlying assumption is that future data is identical to past data. However, when data changes over time, possibly in an unforeseeable manner, this will lead to wrong predictions potentially harming e.g. industrial production processes for which the results of the ML-models is used. Changes in the data might be due to many reasons, e.g. the degradation of physical sensors, maintenance work, dust on a camera lens, changes in illumination, changes in preceding production steps or some other aspects.

When a ML-model is deployed into operation, e.g. as ML-artifact or a computer program product according to the present description, it is, therefore, advantageous to add the monitoring-artifact. This component is designed and set up to derive meaningful metrics e.g. from the input data, the behavior of the ML-model or ML-artifact and/or the inference results or ML-results, such that an indication can be given if the current prediction of the ML-model is still reliable or not reliable anymore.

The monitoring-artifact can be designed and set up in a way, that it is e.g. able to detect differences in the data used for training the ML-model or ML-artifact and the input-data, meaning the data used for inference. The monitoring-artifact can be e.g. designed and set up in a way, that it can detect, if the input-data "drifted away" from the training-data (e.g. by changes in the performance of a sensor used) and/or, e.g. that the ML-model or ML-artifact have not been trained for the use case covered by the input-data.

The monitoring-artifact can e.g. the designed and set up in a way, that it is able to detect statistical differences, or other differences, between the data used for training and the data used for inference - e.g. the input-data according to the present description. Such statistical or other differences can be related e.g. to a number range covered by the training data compared to the input-data (e.g. statistical information regarding brightnesses or brightness-ranges of pictures), information regarding noise within such data (e.g. regarding a signal-to-noise ratio), information regarding the size, form, and/or design of components, people or other things to be detected by the ML-model or ML-artifact, or other comparable differences between training data and data used as input data for inference.

Such differences can e.g. be detected by using the input-data, e.g. by comparing information related to the input-data to information related to training data of the ML-model or ML-artifact (e.g. statistical analysis results and/or ML-analysis-results regarding the input- and training-data, or the input- and training-data itself).

Such differences also can e.g. be detected by using the ML-result, e.g. whether the ML-result allows a clear and relatively unambiguous conclusion or whether the ML-result is rather unclear and possibly even ambiguous. This can be e.g. realized in case of a ML-model, which is expected to output either 1 or 0, that reliable results are ones which are close to 1 and 0 (e.g. results larger then 0.9 or 0.75, or smaller than 0.1 or 0.25), and results with less reliability can be ones which are clearly inbetween 0 and 1 (e.g. around 0.5 or e.g. in a range between 0.25 and 0.75).

The monitoring-artifact can be designed and set up as a monitoring-functionality and/or a monitoring-software-component. The monitoring-artifact can further be designed and set up to realize a monitoring-functionality when executed by a computer.

The monitoring-artifact can be designed and set up as software code, e.g. source code or binary code, being at least part of the computer program product or being used during the creation of the computer program product.

That the monitoring-artifact can e.g. comprise the functionality of a monitoring-ML-model (a ML-model with a monitoring functionality) or a statistical or other analysis model. This can be designed and set up, that the monitoring-artifact is designed and set up as software code, e.g. source code or binary code, representing, at least among others, the functionality of a trained or untrained monitoring-ML-model and/or a statistical or other analysis model when being executed by a computer.

The statistical or other analysis model can represent e.g. the functionality of a statistical analysis of the input-data, an image-analysis of the input-data, a big-data-analysis of the input data and/or any other evaluation of the input-data.

That the computer program product comprises the monitoring-artifact can be designed and set up in a way, that e.g. the computer program product comprises at least one or more parts of the source code or binary code of the monitoring-artifact. It can also be designed and set up in a way, that the computer program product contains a compiled and/or optimized version of at least one or more parts of the source code or binary code of the monitoring-artifact. That the computer program product comprises the monitoring-artifact can be designed and set up in a way, that the monitoring-artifact is used for the creation of the computer program product in a way, that the computer program product comprises the functionality of the trained or untrained monitoring-ML-model and/or the statistical or other analysis model.

That the computer program product comprises the monitoring-artifact can be designed and set up in a way, that e.g. the computer program product comprises a compiled and/or optimized version of at least one or more parts of the monitoring-artifact. The compilation and/or optimization can be designed and set up in a way, that the compiled or uncompiled parts and/or functionalities of the monitoring-artifact contained in the computer program product are optimized for inference. This can be done by compilations and/or optimizations known in the prior art, e.g. by leaving out parts of the monitoring-artifact not used for inference. Such parts can e.g. be parts e.g. only used for training and/or set up of the monitoring-artifact, e.g. for training and/or set up of the trained or untrained monitoring-ML-model and/or a statistical or other analysis model of the monitoring-artifact. The compilation and/or optimization can also be designed and set up in a way, that the compiled or uncompiled parts and/or functionalities of the monitoring-artifact contained in the computer program product are optimized for inference and training.

The monitoring-artifact can be software code in any software computer language or controller programming language, e.g. Python, C, C+, C++, a programming language according the standard IEC 61131 or the like - or be a compiled version of such software code.

The monitoring-artifact can be designed and set up e.g. as a so called "computational graph". This can e.g. be designed and set up in a way, that the monitoring-artifact comprises software code representing the structure of a computational graph or consists of such software code.

In addition to the monitoring-artifact the computer program product can comprise at least one further monitoring artifact, whereas each of the at least on further monitoring artifacts can be designed and set up as a monitoring artifact according to the present description.

The monitoring-artifact can be designed and set up - or can be integrated in the computer program product - in a way, that the monitoring-artifact is automatically updated or trained once the ML-model or ML-artifact is updated or trained. The monitoring-artifact can further be designed and set up - or can be integrated in the computer program product - in a way, that the monitoring-artifact can automatically be updated or trained once the ML-model or ML-artifact is updated or trained.

A machine learning method is understood, for example, an automated ("machine") method, which does not generate results by predetermined rules, but in which regularities are identified from many examples (usually automatically) by means of a machine learning algorithm or learning method, on the basis of which statements about data to be analyzed are then generated.

Such machine learning methods can, for example, be trained and set up as a supervised learning method, a partially monitored learning method, an unsupervised learning process or an empowering learning method ("reinforcement learning").

Examples of machine learning methods are e.B. regression algorithms (e.B linear regression algorithms), a generation or optimization of decision trees (so-called "decision trees"), learning methods for neural networks, clustering methods (e.B. a so-called "k-means clustering"), learning methods for or generation of support vector machines (SVM), learning methods for or generation of sequential decision models or learning methods for or creation of Bayesian models or networks.

The result of such an application of such a machine learning algorithm or learning method to certain data, e.g. according to the present description, is referred to as a "machine learning model" or "ML-model". Such an ML-model represents the digitally stored or storable result of applying the machine learning algorithm or learning method to the analyzed data or training data.

The generation of the ML-model can be designed and set up in a way, that the ML-model is newly formed by the application of the machine learning method. The generation of the ML-model can also be designed and set up in a way, that an already existing ML model is changed or adapted by the application of the machine learning method.

Examples of such ML-models are results of regression algorithms (e.B. a linear regression algorithm), neural networks, decision trees, the results of clustering methods (including, for example, the clusters or cluster categories, definitions and/or parameters obtained), support vector machines (SVM), sequential decision models or Bayesian models or networks.

Neural networks can, for example, be so-called "Deep Neural Networks", "Feed Forward Neural Networks", "Recurrent Neural Networks"; "Convolutional Neural Networks" or "Autoencoder Neural Networks". The application of corresponding machine learning methods to neural networks is often referred to as "training" of the corresponding neural network.

Decision trees can, for example, be formed and set up as so-called "iterative dichotomizers 3" (ID3), classification or regression trees (CART) or so-called "random forests".

A neural network is understood, at least in connection with the present description, as an electronic device, a software code and/or a software code stored in an electronic memory of on another storage component or device, comprising a network of so-called nodes, whereby usually each node is connected to several other nodes. The nodes are also referred to as neurons or units, for example. Each node has at least one input and one output connection. As input nodes for a neural network, such nodes are understood, which can receive signals (data, stimuli, patterns, or the like) from the outside world. Output nodes of a neural network are those nodes that can transmit signals, data, or the like to the outside world. So-called "hidden nodes" are those nodes of a neural network that are neither formed as input nor as output nodes.

For example, the neural network can be formed as a so-called deep neural network (DNN). Such a "deep neural network" is a neural network in which the network nodes are arranged in layers (whereby the layers themselves can be one-, two- or even higher-dimensional). A deep neural network comprises at least one or two so-called hidden layers, which only include nodes that are not input nodes or output nodes. That is, the hidden layers have no connections to input signals or output signals.

A so-called "deep learning" is understood, for example, as a class of machine learning techniques that uses many layers of nonlinear information processing for supervised or unsupervised feature extraction and transformation as well as for pattern analysis and classification. In the context of such "deep learning", a so-called "deep neural network", e.g. according to the present description, is usually used.

The neural network can, for example, also have a so-called autoencoder structure. Such an autoencoder structure may be suitable, for example, to reduce a dimensionality of the data and, for example, to recognize similarities and similarities.

A neural network can, for example, also be formed as a so-called classification network, which is particularly suitable for dividing data into categories. Such classification networks are used, for example, in connection with handwriting recognition or object or character recognition.

Another possible structure of a neural network can be, for example, the design as a so-called "deep believe network".

A neural network, for example, may also have a combination of several of the structures mentioned above. For example, the architecture of the neural network may include an autoencoder structure to reduce the dimensionality of the input data, which can then be further combined with another network structure, for example, to detect peculiarities and/or anomalies within the data in the reduced dimensionality or to classify or cluster the data in the reduced dimensionality.

The values describing the individual nodes and their connections, including other values describing a specific neural network, can be stored, for example, in a set of values describing the neural network. Such a set of values then represents, for example, a design of the neural network. If such a set of values is stored after training the neural network, for example, a design of a trained neural network is stored. For example, it is possible to train the neural network with corresponding training data in a first computer system, then store the corresponding set of values assigned to this neural network and transfer it to a second system as a design of the trained neural network - and then apply the trained neural network there, e.g.

A neural network, or a ML-model in general, can be realized as software code, e.g. as a ML-artifact according to the present description, stored on a computer, on a controller, in a computer network or in a cloud. It can also be stored an electronic memory or semiconductor memory or another appropriate storage device, like e.g. a hard disk or the like.

A neural network can usually be trained by using various known learning methods by entering input data into the neural network and analyzing the corresponding output data from the neural network to determine parameter values for the individual nodes or for their connections. In this way, a neural network can be trained with known data, patterns, stimuli or signals in a way that is known from prior art in order to be able to use the neural network trained in this way, for example, to analyze further data.

In general, the training of the neural network is understood to mean that the data with which the neural network is trained is processed in the neural network using one or more training algorithms in order to calculate parameters or transfer functions of the individual nodes of the neural network or the connections between two nodes within the neural network.

For the training of a neural network, e.g. according to the present description, for example, one of the methods of so-called "supervised learning" can be used. Here, results or skills assigned to this data are trained to a network by training with corresponding training data. Furthermore, a method of so-called unsupervised learning can also be used to train the neural network. For example, such an algorithm generates a model for a given set of inputs that describes the inputs and enables predictions from them. For example, there are clustering methods with which the data can be divided into different categories if they differ from each other, for example, by characteristic patterns.

When training a neural network, supervised and unsupervised learning methods can also be combined, for example, if parts of the data are associated with trainable properties or abilities, while this is not the case with another part of the data.

Furthermore, methods of so-called reinforcement learning can also be used for the training of the neural network, at least among other things.

For example, a training that requires a relatively high computing power of a corresponding computer can be done on a high-performance system, while further work or data analysis with the trained neural network can then be carried out on a lower-performance system. Such further work and/or data analysis with the trained neural network can be carried out, for example, on an assistance system and/or on a controller, a control device, a programmable logic controller or a modular programmable logic controller or other corresponding devices according to the present description.

Machine learning, and/or the monitoring of a machine learning system, works in two main phases: training and inference.

Inference is the process of generating a result of the ML-artifact, the ML-model or the monitoring-artifact by inputting new data to these artifacts/models to generate a result, whereas the new data has not been used for training and/or set up of the ML-artifact, the ML-model or the monitoring-artifact. E.g., Machine learning inference is the ability of a machine learning system to make predictions from novel data. There are three key components needed for machine learning or monitoring inference: a data source, a machine learning or monitoring system to process the data, and a data destination.

In the training phase, machine learning model or monitoring model is fed with a curated dataset so that it can "learn" everything it needs to about the type of data it will analyze. Then, in the inference phase, the model can make predictions.

Training refers to the process of using a machine learning algorithm to build a model. Training involves the use of a deep-learning framework (e.g. the software library "TensorFlow") and training dataset. IoT data provides a source of training data that data scientists and engineers can use to train machine learning models for a variety of use cases, from failure detection to consumer intelligence.

More specifically, e.g. a trained neural network is put to work out in the digital world using what it has learned - to recognize images, spoken words, a blood disease, or suggest the shoes someone is likely to buy next, or comparable use cases - e.g. in a streamlined form of the neural network application. Such speedier and more efficient version of the neural network infers things about new data it's presented with based on its training. In the AI lexicon this is known as "inference." Inference can't happen without training.

Inference refers to the process of using a trained machine learning algorithm to make a prediction. IoT data can be used as the input to a trained machine learning model, enabling predictions that can guide decision logic on the device, at the edge gateway or elsewhere in the IoT system.

In many use cases for a machine learning system, e.g. in industrial environments or controllers, what you need is a speedy application that can retain the learning and apply it quickly to data it's never seen. Here a compilation and/or optimization for inference can be used to enable an inference optimized machine learning system to enable taking smaller batches of real-world data and quickly coming back with the same answer.

While this is a relatively new area of the field of computer science, there are two main approaches to taking that hulking neural network and modifying it for speed and improved latency in applications that run on other devices, computers, handheld devices and/or across other networks.

The first approach looks at parts of the neural network that don't get activated after it's trained. These sections just aren't needed and can be "pruned" away. The second approach looks forways to fuse multiple layers of the neural network into a single computational step.

The ML-result can be designed and set up as any result produced by the ML model and/or the ML-artifact as an answer to inputting the input-data into the ML-model and/or the ML-artifact. It can be or comprise for example each kind of digital information, e.g. a number, alphanumeric data, a vector, a tensor of any dimension or a comparable output.

The ML-result-reliability-information is designed and set up to contain an indication and/or a meaningful metrics, whether the ML-result should be still reliable or not reliable anymore.

Methods utilized for creating the ML-result-reliability-information can be either

- static, i.e., a sequence of predefined mathematical operations on the input data to obtain the respective monitoring values, or
- trained, i.e., consisting of operations that are configured/parametrized based on data provided in a training phase, where the trainable methods can also incorporate static operations.

The ML-result-reliability-information regarding the ML-results can be based upon

- the input-data,
- the internal data flow and intermediate data representations within the original ML-model or ML-artifact, and/or
- the ML-result.

The ML-result-reliability-information can e.g. contain information, that a ML-result is reliable, is not reliable, is critical, and/or has to be observed, or comparable information. The ML-result-reliability-information can further contain all kinds of reliability measures, like e.g. a reliability score in a given number-range. Such a number range can be for example a reliability number in the range between zero and 10, where zero e.g. means not reliable and 10 totally reliable. The ML-result-reliability-information can also comprise several different kinds of information like the ones named above and/or comparable information.

The ML-result-reliability-information can be e.g. produced by using all kinds of statistical or other mathematical or big-data-analysis methods based on the input data, the internal data flow within the original ML-model or-artifact and/or the ML result. The ML-result-reliability-information can also be produced as an inference result of inputting the input data, internal data flow data within the ML-model or -artifact and/or the ML-result into the monitoring artifact. In that case, the monitoring artifact can for example be designed and set up as an ML-model, e.g. a neural network, a statistical model and/or any other mathematical model.

The qualified-ML-result can for example be comprise the ML-result and/or the ML-result-reliability-information. A qualified-ML-result can for example also comprise an information based on the ML-result and/or an information based on the ML-result-reliability-information.

A qualified-ML-result can for example be designed and set up in a way, that in the case, in which the ML-result-reliability-information gives a hint, that the input data might differ in one or more properties or types from data used for training or set up of the ML-model or the ML-artifact, the qualified-ML-result comprises an information regarding such difference and/or an information, that the input-data e.g. needs special attention. The qualified-ML-result can for example only comprise such warning or comprise such warning including the ML-result. The qualified-ML-result can e.g. be designed and set up in a way, that in cases of small differences between training data and input-data, the qualified-ML-result comprises the warning and the ML-result, and in cases of big differences between training data and input-data, the qualified-ML-result only comprises the respective warning.

A computational graph is a directed graph comprising a plurality of nodes and directed edges. Each directed edge connects a respective first node to a respective second node that represents an operation that receives, as input, an output of an operation represented by the respective first node or the numerical value of the fist node or of the variable represented by the first node. The nodes correspond to operations or variables, whereas variables also include parameters and numerical values. Variables can feed their value into operations, and operations can feed their output into other operations. This way, every node in the graph defines a function of the variables. The values that are fed into the nodes and come out of the nodes are generally tensors, essentially meaning a multi-dimensional array. Hence, it subsumes scalars, vectors and matrices as well as tensors of a higher rank.

In some implementations, the operations represented in the computational graph are mathematical and/or logic operations. Operations may e.g. be neural network operations or operations for a different kind of machine learning model.

For example, the operations represented by the computational graph may be operations necessary for the neural network or machine learning model to compute an inference, i.e., to process an input through the layers of the neural network, or an according structure of a machine learning model, to generate an output for the input.

As another example, the operations represented by the computational graph may be operations necessary to train the neural network or machine learning model by performing a training procedure to adjust the values of the parameters of the neural network or machine learning model, e.g., to determine trained values of the parameters from initial values of the parameters. In some cases, e.g., during training of the neural network or machine learning model, the operations represented by the computational graph can include operations performed by multiple replicas of the neural network or the machine learning model.

Representing a neural network or other machine learning model as a computational graph provides for a flexible and granular way to efficiently implement the neural network, especially if the operations for the neural network are distributed across multiple devices with different hardware profiles.

Realization of a mathematical and/or logical process as a computational graph, e.g. realizing a neural network or another machine learning model as a computational graph, can have one or more of the following advantages. In general, operations - e.g. mathematical and/or logical operations - can be represented as a computational graph of nodes and directed edges as described above. As an example, an operation to generate an inference from an input, i.e. of a neural network or many other machine learning models, can be represented as a computational graph of nodes and directed edges as described above.

The advantages of using a realization of a mathematical and/or logical software or workflow as a computational graph is described below in more detail using neural networks or other machine learning models as an example. A computational system or computational network can process such a computational graph representation to efficiently perform the operations of the neural network or the machine learning model. The system achieves this efficiency because the computational graph has fewer abstractions than a conventional neural network or other machine learning model represented as a sequence of layers, tree structure or the like. In particular, the computational graph can be more easily partitioned for parallel operations, e.g. on different hardware devices, processors, processor cores, CPUs, GPUs or the like, than the conventional neural network representation. By way of illustration, subgraphs of the computational graph can be assigned to unique devices, e.g. hardware devices, CPU-cores, graphics processing units (GPUs) or the like, for example each subgraph can be assigned to a different device than other subgraphs, each of which performs operations in the respective subgraph, to reduce an overall time required to perform operations of the neural network or the machine learning model.

Further general advantages of computational graphs are:

- Node-Link Structure: The distinct node-link structure of the computational graphs can store a lot of information. Network-based and relational problems can often be represented in this format in an advantageous way.
- Distributed Computing: Huge problems with billions of nodes/elements cannot be processed by a single core or system. The fact that distributed computing can directly be implemented in computational graphs, saves up a lot of computation, and reduces time complexity.
- Relational Problems: Many relational problems can only be solved through computational graphs.

A computational graph can be relatively easy be transferred or exported to other devices and/or environments. One can e.g. use a computational graph made, with the software library "TensorFlow" in a special development environment, in other applications or environments, like mobile applications, embedded devices, and backend servers. This is, among others, because e.g. "TensorFlow" uses computational graphs as the format for saved models.

Computational graphs are also easily optimized to make the software workflow more efficient and e.g. allow it to run on less powerful hardware. Such optimizations, which e.g. can be performed by an according optimizer and/or compiler, can e.g. be:

- Statically infer the value of tensors by folding constant nodes in your computation ("constant folding");
- Separate sub-parts of a computation that are independent and split them between threads or devices;
- Simplify arithmetic operations by eliminating common subex-pressions.

For practically implementing neural networks and other machine learning models as computational graphs, software libraries like TensorFlow (https://www.tensorflow.org/), Torch (http://torch.ch/), Theano (https://pypi.org/project/Theano/) and/or Pytorch (https://pytorch.org/) are popular examples for deep learning or machine learning libraries. All those libraries employ computational graphs for representing their machine learning and deep learning models and let their data and calculations flow through the graph. When e.g. a neural network or machine learning model is defined and/or set up in e.g. Tensorflow, Torch, Theano or Pytorch, the network or ML-model is created as a computational graph, which can then be executed on the desired hardware.

In a preferred embodiment, the computer program product is designed and set up in a way, that the ML-artifact is designed and set up for training the ML-model based on training data, or for being able to train the ML-model based on the training data, and/or that the monitoring-artifact is designed and setup for training itself based on training data, or for being able to train itself based on the training data.

That the ML-artifact and/or the monitoring-artifact are designed and set up to train themselves has the advantage, that it is easier to train such models and/or artifacts or to retrain such models and/or artifacts.

In a preferred embodiment the construction of the computer program product can be designed in a way, that the ML-artifact and/or the monitoring-artifact are separately trained with respective training data according to the present description, and that then the computer program product is created by combining the trained ML-artifact and the trained monitoring-artifact.

Such combination of the ML-artifact and the monitoring-artifact can for example be performed by directly combining both components.

Such combination can also be performed by using a compilation and/or optimization process for combining the ML-artifact and the monitoring-artifact. Such compilation and/or optimization can be designed and set up according to the present description. It can e.g. comprise a process or step for removing parts not necessary for inference - e.g. parts only necessary for training the ML-artifact and/or the monitoring-artifact.

If the ML-artifact and/or the monitoring-artifact have to be retrained or are retrained with new training data, the original ML-artifact and/or the original monitoring-artifact (both comprising respective components for training themselves respectively) are used for such retraining. After retraining, the computer program product is again combined or compiled according to the present description, e.g. according to the preceding paragraph, using the retrained ML-artifact and/or retrained monitoring-artifact.

In a preferred embodiment, the training data used for training of the monitoring-artifact is the same data used for training the ML-model, or at lease comprises this data or is part of this training data.

In another preferred embodiment the training data used for training of the ML-model is based on the training data used for the training of the monitoring-artifact. In a further preferred embodiment, the training data used for the training of the monitoring-artifact is based on the training data used for the training of the ML-model.

That the training data is based on other training data can be designed and set up in a way, that the training data as part of the other training data, comprises the other training data or corresponds to the other training data. It can additionally be designed and set up in a way, that the training data is a preprocessed or processed version of the other training data, whereas the preprocessing or processing can be designed and set up according to the present description.

These preferred embodiments have the advantage, that the monitoring-artifact can be trained according to the training of the ML-artifact. This makes it easier to detect, whether the input-data used for inference using the ML-artifact is data of a kind, with which the ML-model has been trained or whether there are differences between the input-data and the data, with which the ML-model has been trained. And the latter case is one, which preferably could or should be observed or which should be taken care off.

Training data can e.g. be so called "labeled data" or so called "unlabeled data".

So-called labeled data is e.g. used for supervised learning algorithms and in general consists of data to put in a system, e.g. a machine learning system or a monitoring system for a machine learning system, and to each of the input data sets, an expected result is assigned, which is the expected output of the machine learning system and/or the monitoring system after inputting the input data set.

Unlabeled data is regularly used for unsupervised learning. Such unlabeled data consists only of data to input into a machine learning system or a monitoring system for a machine learning system.

The training data can be designed and set up in a way, that it can be input into the ML-artifact and/or the monitoring-artifact without changes. The training data can also be designed and set up in a way, that it is input into the ML-artifact and/or the monitoring-artifact after one or more preprocessing steps or optimization steps according to the present description.

The computer program product can further be designed and set up in a way, that after training or setting-up the ML-artifact and the monitoring-artifact based on the training-data the trained ML-artifact and the trained or amended monitoring-artifact are combined into the computer program product.

This embodiment as for example the advantage, then the ML-artifact and monitoring-artifact can be handled, managed, setup, trained and/improved separately, and the computer program product resulting from them can be optimized e.g. for special devices and/or inference or the like.

This further enables systematically and/or efficiently generating confidence-, resilience- and/or reliability-information concerning results created by machine learning methods.

Combining the ML-artifact and the monitoring-artifact to receive the computer program product can e.g. be designed and set up according to the present description.

The combining step combining the ML-artifact and the monitoring-artifact into the computer program product can be e.g. designed and set up to connect the ML-artifact and the monitoring-artifact to a common entry-point, entry-layer or entry-artifact and/or to a common output-point, output-layer or output-artifact. Such common entry-point, entry-layer or entry-artifact can e.g. be designed and set up as a preprocessing-artifact according to the present description. Further, such common output-point, output-layer or output-artifact can be designed and set up as a postprocessing-artifact according to the present description.

The process of combining the trained ML-artifact and the trained or amended monitoring-artifact into the computer program product can for example be designed and set up as an optimization, a compilation and/or a combination process according to the present description.

In a preferred embodiment, the computer program product only contains the elements of the ML-artifact and the monitoring-artifact needed for inference. The combination of the ML-artifact and monitoring-artifact into the computer program product can be designed and set up in a way, that only the components of the ML-artifact and monitoring-artifact needed for inference are transferred into the computer program product. This can e.g. be achieved by removing all parts only needed for training and/or set up during the combination of the ML-artifact and the monitoring-artifact into the computer program product. This embodiment as the advantage, that the computer program product as an improved performance, because it contains less components than the direct combination of the ML-artifact with the monitoring-artifact. This can enable e.g., that the computer program product can be deployed on less powerful hardware then it is necessary for running the full ML-artifact and/or the full monitoring-artifact.

In another preferred embodiment, the computer program product contains the elements of the ML-artifact and the monitoring-artifact needed for training and needed for inference. The combination of the ML-artifact and monitoring-artifact into the computer program product can further be designed and set up in a way, that the components of the ML-artifact and the monitoring-artifact needed for training and inference are transferred into the computer program product. This embodiment has the advantage, that the retraining or further training of the ML-artifact or ML-model and/or the monitoring-artifact can be performed by using the computer program product directly. This e.g. enables a retraining or further training of the system directly in the deployed version of the computer program product.

The computer program product can be designed and set up in a way, that the ML-artifact and the monitoring-artifact are executed in a single program run or cycle, if the computer program product is run on a computer.

That the computer program product, when executed by a computer, is executed in a single program run or cycle can be designed and set up in a way, that after starting the execution of the computer program product on the computer, the functionality of the ML artifact and the functionality of the monitoring-artifact are executed and/or the qualified-ML-result is output, before the execution of the computer program product ends. If the execution of the computer program product is organized in cycles, the fact, that the execution of the computer program product is performed in a single program cycle, can be designed and set up in a way, that after the begin of a program cycle the functionality of the ML-artifact and the functionality of the monitoring-artifact are executed and/or the qualified-ML-result is output, before this cycle ends.

That the computer program product when executed by a computer is executed in a single program run or cycle can further be designed and set up in a way, that after a single start command for the computer program product, or for one cycle of the computer program product, the execution of the computer program product is not halted or ended before the functionality of the ML-artifact and the functionality of the monitoring-artifact have been executed and/or the qualified-ML-result is output.

The execution of the computer program product ends for example, if the execution of the computer program product stops due to an according instruction within the computer program product, if new input-data is to be used with the computer program product or a reaction of a user regarding the qualified-ML-result is needed for further processing. If new input-data is to be used with a computer program product, the execution of the computer program product ends or stops and the new cycle or run of the computer program product is started for the new input-data.

This embodiment as the advantage, that the qualified-ML-result can be generated with reduced effort, because e.g. only one computer program product has to be deployed on a respective system and no separate tools have to be deployed for creating the ML-result and creating an according reliability information.

The computer program product can further be designed and/or set up as a single artifact.

The computer program product can further be designed and set up in a way,

that the computer program product comprises a computational graph, comprising both, the ML-artifact and the monitoring-artifact,
or,
that it is possible to realize a computational graph comprising both, the ML-artifact and the monitoring-artifact, whereas the computational graph is part of the computer program product.

In this preferred embodiment, the monitoring-artifact together with the ML-artifact is integrated in one computational graph, resulting in a single computational graph for e.g. ML-artifact- or ML-model-inference and a monitoring of this inference.

The computational graph comprises the operations necessary to calculate the output of the ML-artifact or ML-model. Therefore, the architecture of the ML-model or ML-artifact is extended by additional data processing streams for monitoring, parallel to the original ML-artifact or ML-model architecture. These parallel streams do not influence the training or inference results considering the original ML task that is approached. Thereby, the core component for predicting the values required by the business logic (e.g. the inference results) remains unchanged. However, by integrating the data processing streams for monitoring into the computational graph, access to all relevant aspects for monitoring is given (input data, the internal data flow and intermediate data representations within the original ML-model or ML-artifact as well as the inference results).

The computer program product, the ML-artifact, and monitoring-artifact and the computational graph can for example be designed and set up according to the present description.

The integration of the monitoring-artifact into the computational graph together with the ML-artifact solves the task named above e.g. for the following reasons:

- Monitoring data streams, meaning e.g. the monitoring-artifact, can be directly configured and/or trained based on the data on which the ML-model or ML-artifact to be monitored is trained. Thereby, when updating the ML-model or ML-artifact by retraining it with new data, also the monitoring-artifact can be updated.
- No additional code is required for monitoring. Only the qualified-ML-result must be considered for further processing, e.g., communicated to other systems. Thereby, also the consistency between different environments is ensured (if the consistency of the model behavior itself is ensured, which is in general necessary for the successful deployment & operation).
- New monitoring methods can be written in form of additional data processing streams, e.g. additional monitoring-artifacts, in the computational graph and can, thereby, efficiently be incorporated into respective libraries.

A structuring of the computer program product as a computational graph has the advantage that program sequences are bundled and/or structured in such a way, that associated program sequences are bundled in the same structure in the computational graph and thus the program sequence can run technically more efficiently in the computer. In particular e.g. a distribution of the processing of the program to several computing cores, processor cores, processors, computers, computer cores or other hardware can be performed easier and more efficiently.

In a preferred embodiment, the computer program product is designed and set up as a single computational graph comprising both, the ML-artifact and monitoring-artifact.

In a further preferred embodiment, the ML-artifact is designed and set up as a computational graph and/or the monitoring-artifact is designed and set up as a computational graph. In this embodiment, the computer program product can e.g. be created by connecting the ML-artifact computational graph and the monitoring-artifact computational graph. Such connection can e.g. be a direct coupling of the both computational graphs, or a coupling of both computational graphs to a common input node or structure and/or a common output node or structure. Such input node or structure can for example be designed and set up as a preprocessing node or structure for the data originating from the at least one device e.g. to create the input-data. Such output node or structure can for example be designed and set up as a postprocessing node or structure for example to create the qualified-ML-result.

In a further preferred embodiment, an optimization and/or compilation process is used to combine the ML-artifact computational graph and the monitoring-artifact computational graph to the single computational graph comprised by the computer program product or realizing the computer program product. Such optimization and/or compilation process can be designed and set up to the present description.

That the ML-artifact and monitoring-artifact are part of a computational graph can be designed and set up, that the computational graph consists of a fully connected graph structure whereas the fully connected graph structural contains elements realizing a ML-artifact functionality and contains elements realizing a monitoring-artifact functionality. Such ML-artifact functionality and/or monitoring-artifact functionality can for example be a respective inference functionality and/or a respective training and/or set up functionality. That the graph is fully connected can for example be designed and set up in a way, that it is not possible to separate the graph into separate, non-connected sub graphs, without cutting at least one edge of the graph - e.g. an edge between two nodes.

The computer program product can further be designed and set up in a way,

that the computer program product further comprises a preprocessing-artifact to convert the data from the at least one device into the input-data,
and/or
that the computer program product further comprises a postprocessing-artifact, to generate the qualified-ML-result.

The preprocessing artifact, the data from the at least one device and the input-data can be for example designed and set up according to the present description. Also, the postprocessing-artifact and the qualified-ML-result can be designed and set up according to the present description.

The computer program product can further be designed and set up in a way, that the computer program product comprises a computational graph, comprising both, the ML-artifact and the monitoring-artifact, and that this computational graph comprises also the preprocessing-artifact and/or the postprocessing-artifact.

A computational graph and the integration of the preprocessing-artifact and/or a postprocessing-artifact into the computational graph can be designed and set up according to the present description.

The task named above is also solved by a computer implemented method for producing a qualified output of an ML-model based on input-data originating from a device,

comprising the steps:

- inputting the input-data into a ML-artifact, comprising the functionality of the ML-model, to produce a ML-result,
- inputting the input-data in a monitoring-artifact to produce a ML-result-reliability-information,
- outputting a qualified- ML-result based on the ML-result and the ML-result-reliability-information.

Thereby, the method steps of inputting input-data into the ML-artifact, inputting the input-data in the monitoring-artifact and outputting a qualified-ML-result based on the ML-result and the ML-result-reliability-information are performed in a single run of a computer program product when run on a computer.

Because both, running the functionality of the ML-artifact and monitoring this ML-model-inference by the monitoring-artifact, are run with in the same run during the execution of the computer program product on a computer, a method for systematically and efficiently generating confidence-, resilience-space and/or reliability-information concerning results created by an artificial intelligence method is created.

The ML-model, the ML-artifact, the input-data, the ML-result, the monitoring-artifact, the ML-result-reliability-information, the qualified-ML-result, outputting the qualified-ML-result and performing the named method steps in a single run of a computer program product when run on a computer can be designed and set up according to the present description.

That the method steps of inputting input-data into the ML-artifact, inputting the input-data into the monitoring-artifact and outputting a qualified-ML-result are performed in a single run of a computer program product when run on a computer, can be designed and set up in a way, that after starting a run of the computer program product, and/or the computer implemented method, on the computer, inputting input-data into the ML-artifact, inputting the input-data into the monitoring-artifact, executing the functionality of the ML artifact, executing the functionality of the monitoring-artifact and outputting the qualified-ML-result is performed, before the execution of the computer program product run ends. If the execution of the computer program product and/or the computer implemented method is organized in cycles, the fact, that the method steps of inputting input-data into the ML-artifact, inputting the input-data into the monitoring-artifact and outputting a qualified-ML-result are performed in a single run of a computer program product when run on a computer, can be designed and set up in a way, that after starting a new cycle of the computer program product execution, and/or the computer implemented method, on the computer, inputting input-data into the ML-artifact, inputting the input-data into the monitoring-artifact, executing the functionality of the ML artifact, executing the functionality of the monitoring-artifact and outputting qualified-ML-result is performed, before the execution of the computer program product cycle ends.

That the computer program product, and/or the computer implemented method, when executed by a computer is executed in a single program run or cycle can further be designed and set up in a way, that, after a start of the computer program product, or the start of a new cycle of the computer program product, the execution of the computer program product, or of the cycle of the computer program product, is not halted or ended before the functionality of the ML-artifact and the functionality of the monitoring-artifact have been executed and/or the qualified-ML-result is output.

The execution of the computer program product ends for example, if the execution of the computer program product stops due to an according instruction within the computer program product, if new input-data is to be used with the computer program product or a reaction of a user regarding the qualified-ML-result is needed for further processing. The execution of the computer program product also ends for example, if a new starting command is needed to restart the computer implemented method. The execution of the computer program product also ends for example, before a new cycle of the computer program product execution of a new cycle of the computer implemented method is going to start. If new input-data is to be used with a computer program product, the execution of the computer program product ends or stops and the new cycle or run off the computer program product is started for the new input-data.

The task described above is also solved by a computer implemented method for producing a trained ML-model and a trained or amended monitoring artifact based on training-data, comprising the steps:

- inputting the training-data into a ML-artifact, comprising the functionality of a ML-model, to produce a trained ML-artifact,
- inputting the training-data into a monitoring-artifact to produce a trained or amended monitoring-artifact, whereas the method steps of inputting the training-data into the ML-artifact and inputting the training-data in the monitoring-artifact), as well as producing the trained ML-artifact (120, 500) and trained or amended monitoring-artifact (130, 140, 600), are performed in a single run of a computer program product when run on a computer.

An especially efficient method for creating reliability-information regarding an artificial intelligence method is created by such method for parallel training of the ML-artifact and the according monitoring-artifact. By performing such training of both artifacts in one program run, the ML-artifact and monitoring-artifact are trained and/or setup with the same data basis and at the same time, so the monitoring of the ML-result is always correctly and efficiently adapted to the trained ML-artifact or ML-model.

By additionally performing the training and/or setting up of the ML-artifact and monitoring-artifact in the same program run, such training and/or set up is performed very efficiently, because e.g. no separate training and/or set up processes have to be triggered and managed.

The ML-model, the training-data, the ML-artifact, the trained ML-artifact, the monitoring-artifact, the trained or amended monitoring-artifact and performing the named method-steps in a single run of a computer program product when run on a computer can be designed and set up according to the present description.

In a preferred embodiment of the computer implemented method, the method can be designed and set up in a way,
that after training and/or amending the ML-artifact and the monitoring-artifact based on the training-data, the trained ML-artifact and the trained or amended monitoring-artifact are combined into the computer program product.

Amending the ML-artifact and/or the monitoring-artifact can be designed and set up in a way, that e.g. the ML-artifact and/or the monitoring-artifact are trained or set up, e.g. with input-data, parameters or other comparable data, to result in the respective amended ML-artifact and/or monitoring-artifact.

The combining of the trained and/or amended ML-artifact and monitoring-artifact into the computer program product can be designed and set up according to the present description.

The combining of the trained and/or amended ML-artifact and monitoring-artifact can be designed and set up e.g. in a way, that the trained and/or amended ML-artifact and monitoring-artifact are combined as such and e.g. can additionally be, combined with other software or program elements to result in the computer program product.

The combining of the trained and/or amended ML-artifact and monitoring-artifact can further be designed and set up in a way, that e.g. the trained and/or amended ML-artifact and monitoring-artifact are combined into the computer program product after removing parts of the ML-artifact and/or monitoring-artifacts not needed for inference. The combination of those modified ML-artifact and/or monitoring-artifact into the computer program product can be additionally performed with and other software or program elements.

The combining of the trained and/or amended ML-artifact and monitoring-artifact can also be designed and set up in a way, that a compilation and/or optimization process step for compiling and/or optimizing the ML-artifact and/or monitoring-artifact is performed to result in the computer program product. Again, also here the combination of the ML-artifact and monitoring-artifact into the computer program product comprising such compilation and/or optimization process that can be performed additionally with other software or program elements.

Such compilation and/or optimization process as well of the removal of parts of the ML-artifact and/or monitoring-artifact not needed for inference can be further designed and set up according to the present description.

The computer implemented method can further be designed and set up in a way, that the computer program product comprises the ML-artifact and the monitoring-artifact as one single computational graph,
or that the computer program product is realized as a single artifact.

The ML-artifact can thereby be designed and set up e.g. as a trained ML-artifact according to the present description or a untrained ML-artifact according to the present description. Also, the monitoring-artifact can be designed and set up e.g. as a trained or amended monitoring-artifact or a untrained or not amended monitoring-artifact according to the present description.

That the ML-artifact and the monitoring-artifact are part of the computer program product as a single computational graph can further be designed and set up according to the present description. The computer program product can e.g. also be designed and set up as one single computational graph or comprise a computational graph, which itself comprises the ML-artifact and the monitoring-artifact or the functionality of the ML-model or -artifact and the monitoring-artifact.

The computer implemented method can further be designed and set up, that the computer program product is designed and set up according to the present description.

Further preferred embodiments can be found in the dependent claims.

The present invention is explained in more detail below by way of example with reference to the accompanying figures.

The figures show:

Figure 1: Example for a structure of the ML system with integrated monitoring;

Figure 2: Example of process steps for setting up the system of ML-inference including monitoring the according ML-system;

Figure 3: Example of a production system with an included quality inspection component;

Figure 4: Structure of the quality inspection component according to figure 3;

Figure 5: Example for a quality inspection component according to figure 4 with the quality inspection component being realized as computational graph;

Figure 6a: Detailed example for the preprocessing subgraph according to figure 5;

Figure 6b: Detailed example for the neural network computational subgraph according to figure 5 set up for inference;

Figure 6c: Detailed example for the monitoring computational subgraph according to figure 5 set up for inference;

figure 6d: Detailed example for the postprocessing computational subgraph according to figure 5;

Figure 7a: Detailed example for the neural network computational subgraph according to figure 5 set up for inference and training;

Figure 7b: Detailed example or the monitoring computational subgraph according to figure 5 set up for inference and training.

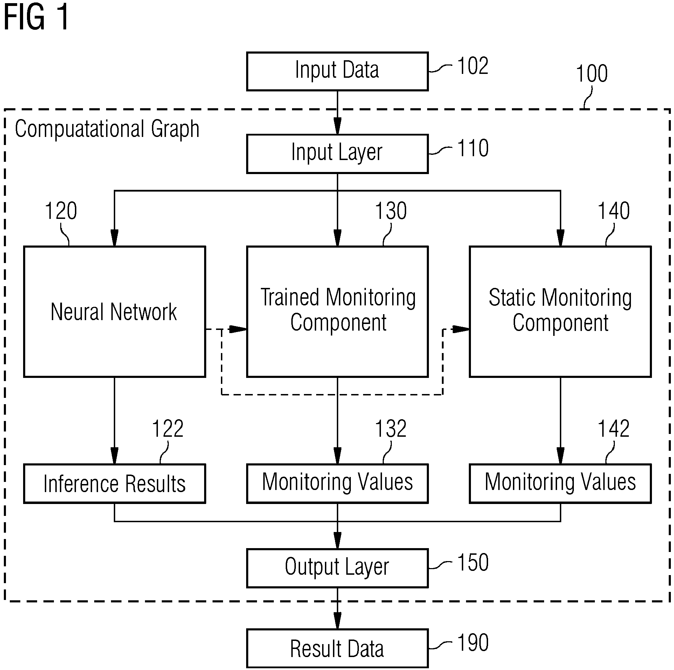

Figure 1 shows an example or a system comprising a neural network 120 with two monitoring components 130, 140 for monitoring the performance of the neural network 120. The system shown in figure 1 is realized as a computational graph 100 comprising an input layer 110 for preprocessing input data 102 entered into the computational graph 100. The preprocessed input data 102 is then forwarded from the input layer 110 to the neural network 120, a trained monitoring component 130 and a static monitoring component 140 or further processing in the respective components 120, 130, 140.

After entering the data produced by the input layer 110 into the neural network 120, an inference result 122 is produced. For this purpose, the neural network has been trained with according training data. The trained monitoring component 130 consists also of the machine learning system which is designed and set up to detect anomalies in the input data. This trained monitoring component is designed and set up in a way, that it detects types of input data which do not fit to the types of input data having been used to train the neural network.

For this purpose, the trained monitoring component 130 has been trained with the same training data, which has also been used to train the neural network 120. After inputting the data from the input layer 110 into the trained monitoring component 130, the trained monitoring component 130 outputs a monitoring value 132 which contains an information, whether the data coming from the input layer 110 corresponds to the types of data used for training the neural network or not.

The data coming from the input layer 110 is also fed into a static monitoring component 140, which is designed and set up calculate statistical parameters of the data fed into this component 140. As a result of feeding the data from the input layer 110 into the static monitoring component 140, the static monitoring component 140 outputs one or more monitoring values 142 containing the information, whether the statistic parameters calculated by the static monitoring component 140 are within preset boundaries or not.

The inference result 122, the monitoring value from the trained monitoring component 132 and the monitoring value from the static monitoring component 142 are then fed into an output layer 150 for preparation of a qualified inference result 190. This result data 190 is output from the computational graph 100 to a device like a computer, a HMI (human machine interface) and/or an user.

In the example shown in figure 1, the input layer 110, the neural network 120, the trained monitoring component 130, the static monitoring component 140 and the output layer 150 are designed and set up as computational subgraphs of the computational graph 100.

In the example shown in figure 1, the computational graph 100 is an example for a computer program product according to the present description, whereas the neural network 120 is an example for an ML-artifact according to the present description. The trained monitoring component 130 and the static monitoring component 140 are examples for monitoring-artifacts according to the present description.

The dashed arrows shown in figure 1 leading from the neural network 120 to the trained monitoring component 130 and the static monitoring component 140 symbolize, that it is possible, in a preferred embodiment, to also input the inference result 122 of the neural network 120 into the trained monitoring component 130 and/or the static monitoring component 140 for advanced analysis of the data.

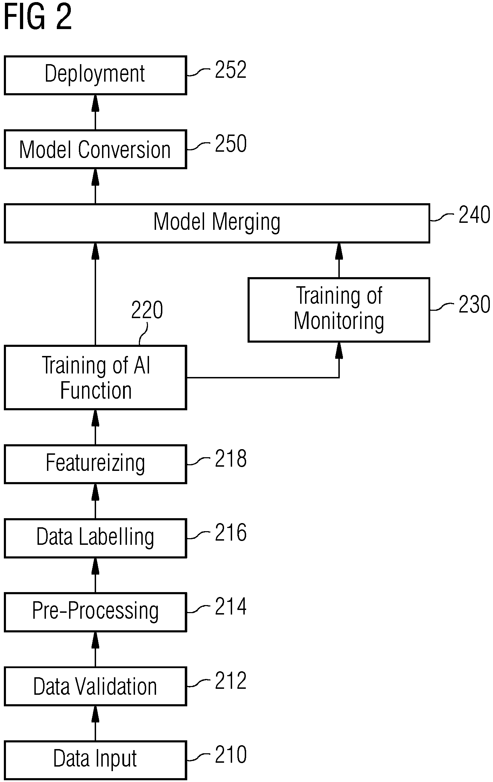

Figure 2 shows a process for training and deploying a computational graph 100 according to figure 1 by separately training the neural network 120 according to figure 1 and the trained monitoring component 130 as well as the static monitoring component 140 according to figure 1.

In a first process step 210, training data is entered into an according training system.

In a second process step 212, the training data is validated to avoid, that inconsistent or incomplete training data is used to train the components 120, 130, 140 named above.

In a next process step 214 the training data is preprocessed by normalizing this data into a number range between zero and one.

Then, in a next step 216, this data is labeled by assigning planned output results of the neural network 120, whereas the planned output results are the result which the neural network 120 should output, when the respective training data is input into the neural network 120.

This labeled data is then featureized in a next step 218 to assign the according features to this data.

After that, in a next step 220, the neural network 120 is trained with the training data created by this process. In a parallel process step 230 the trained monitoring component 130 and the static monitoring component 140 are also trained and/or set up using this created training data.

Afterwards, the trained neural network 120 and the trained and/or set up trained monitoring component 130 and static monitoring component 140 are integrated together with the input layer 110 and the output layer 150 into the computational graph 100 in a model merging step 240.

The computational graph 100 is then in a conversion step 250 compiled into a deployable version, which is adapted to a special hardware, one which this system is planned to be deployed. This conversion step 250 can be for example be designed and set up as the compilation step or optimization step according to the present description.

In the last process step 252, the compiled model is then deployed on the according hardware.

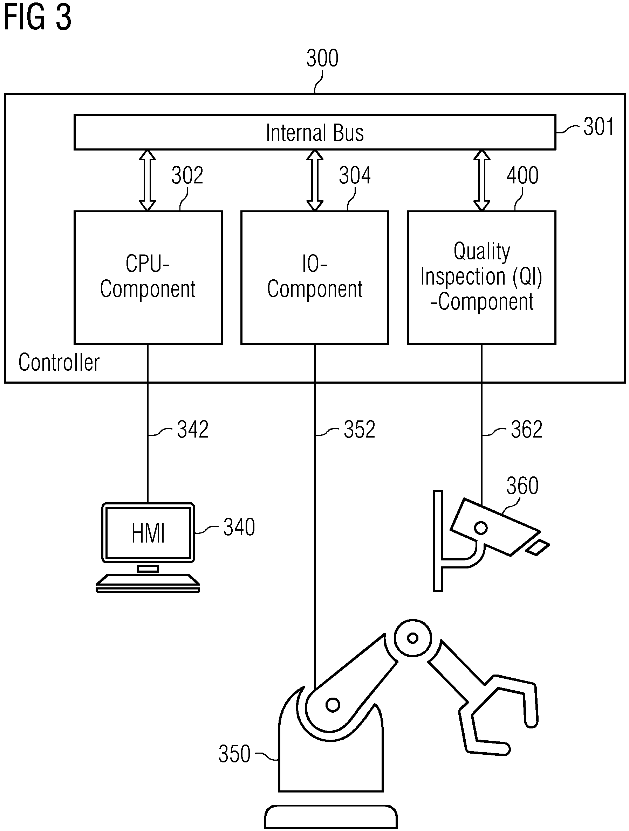

A further example for an embodiment of the present invention is shown in the figures 3 to 7b related to a production system shown in figure 3.

The production system consists of a robot 350 which is controlled by a controller 300 to handle and process products. The controller 300 comprises a CPU component 302, which is designed and set up to run a control program for running a handling and production process using the robot 350. Control commands from the control program in the CPU component 302 are forwarded from the CPU component 302 via an internal bus 301 of the controller 300, an I/O component 304 of the controller 300, and a field bus connection 352 to the robot 350. Sensor and feedback signals from the robot 350 are then also communicated back from the robot 350 via the field bus connection 352 to the controller 300.

The production process is supervised and controlled by a user interface 340, which is run on a computer 340, that is connected by a OPC UA communication connection 342 to the CPU component 302 of the controller 300.

The controller 300 can for example be designed and set up as a modular programmable logic controller 300 with the CPU module 302, an I/O-module 304 and a Quality-Inspection Module 400 connected by a backplane 301. In another embodiment, the controller 300 can be realized as a software controller, in which the CPU component 302, the I/O-component 304 and the quality inspection component 400 are designed as software applications or Apps connected by an internal bus 301. This internal bus 301 can also be designed as an according software application or App - or as a software or hardware bus.

The system shown in figure 3 further consists of a camera 364 taking images of products produced by the robot 350 for controlling their quality. The images are transferred from the camera 360 via a Ethernet connection 362 to the quality inspection component 400 or quality inspection module 400 of the controller 300.

The quality inspection component 400 comprises a neural network, which is or has been trained to distinguish correctly produced products from products with production errors. The quality inspection component 400 is further designed and set up in a way, that it is able to check, whether images taken by the camera 360 and transferred to the quality inspection component 400 are fitting to images used as training data to train the neural network with in the quality inspection component. In this way, the quality inspection component 400 has the ability, whether the results of the neural network analysis of the product pictures taken by the camera 360 should be reliable or need additional attention or checking.

This set-up and functionality of the quality inspection component 400 is discussed in more detail in the following figures.

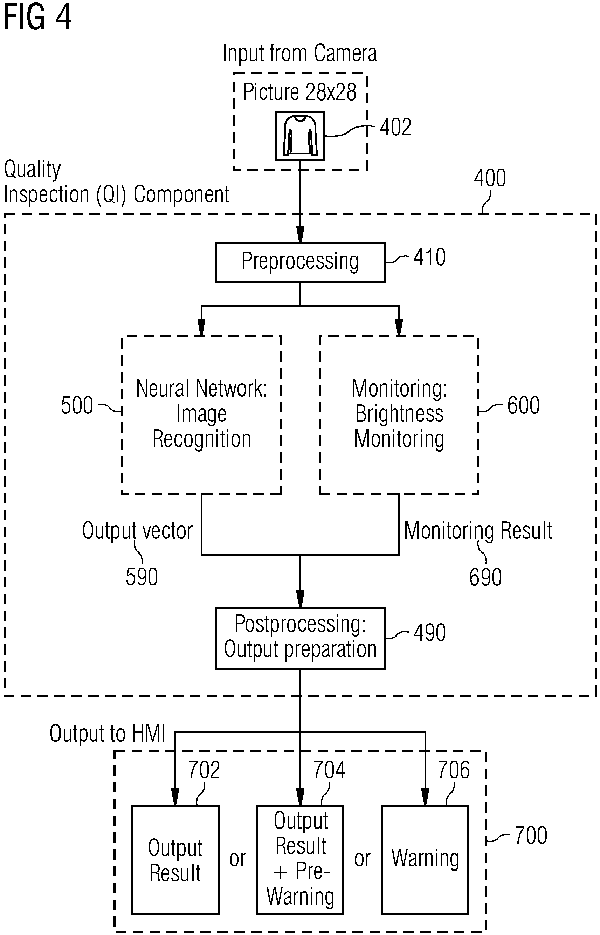

Figure 4 shows a more detailed structure of the quality inspection component 400, as shown in figure 3. In the embodiments shown in figure 4 and the following figures, the quality inspection component 400 designed and set up as a software application. This software quality inspection component 400 can for example be designed and set up as an application 400 for a software controller 300 or e.g. be deployed on an according hardware 400 of a hardware controller 300.

The quality inspection component 400 as shown in figure 4 comprises a preprocessing component 410 for preprocessing image data 402 coming from the camera 360 as shown in figure 3. The preprocessing component normalizes and vectorizes the input data 402, which is explained in more detail in the following figures.

The quality inspection component 400 comprises a neural network 500 for image recognition and a monitoring component 600 for monitoring the average brightness of the respective images 402 taken by the camera 360. The preprocessed data produced by the preprocessing component 410 is then input into the neural network 500 and in parallel into the monitoring component 600.

The image data 402 coming from the camera 360 is an example of data originating from at least one device according to the present description, whereas the data produced by the preprocessing component 410 is an example of input-data according to the present description.

The preprocessed images 402 are then fed into the neural network 500, which is trained and set up to recognize, whether the product shown on the respective image 402 is correctly produced on not. The neural network 500 then outputs an output vector 590 which contains this information.

In parallel, the preprocessed images 402 are fed into the monitoring component 600. This monitoring component 600 is designed and set up to calculate an average brightness of the pictures 402 and to check, whether the average brightness of the picture 402 input into the monitoring component 600 is in the range of brightnesses of the pictures used for training the neural network 500. The result of this check in then output as a monitoring result 690 by the monitoring component 600.

A possible output 690 of the monitoring component 600 could be, that an image 402 used within neural network 500 as a brightness which is fully in the range of the brightnesses is of the training pictures. Another possible output 690 of the monitoring component 600 could be, that a brightness of a picture 402 is still in an extended range of brightnesses of training pictures used to train the neural network 500. A further possible output 690 of the monitoring component 600 is, that an average brightness of the picture 402 is out of the range of brightnesses of the images used to train the neural network 500.

If the average brightness of the image 402 used with the neural network 500 is out of the range of average brightnesses of the pictures used for training the neural network 500, there is an increased probability, that the inference result of the neural network 500 is not correct, and there is, for example, an increased probability, that an incorrectly produced product is not properly recognized by the neural network 500.

The quality inspection component 400 further comprises a postprocessing component 490 for combining the result of the neural network 500 and the monitoring results produced by the monitoring component 600. This combination results in a qualified result 700, 702, 704, 706 of the neural network 500 containing additional information about the reliability of this result. This reliability information is based on the monitoring result 690 of the monitoring component 600.

The reliability information 690 will e.g. have the content, that an output 590 of the neural network 500 is reliable, if the average brightness of the image 402 analyzed by the neural network component 500 is in the range of average brightnesses of images used for training the neural network 500. The reliability information 690 will e.g. further have the content, that the output of the neural network is still reliable, but has to be observed, in the case, in which the average brightness of the image 402 is in an extended range of brightnesses of the images used for training the neural network 500. The reliability information 690 will e.g. have the content, that a classification result of the neural network 500 is not reliable, if an average brightness of the image 402 is outside the extended range of brightnesses of the images used for training the neural network 500.

The postprocessing component creates the named qualified result 700, 702, 704, 706 of the neural network 500, which is output to the HMI 340, as shown in figure 3. In case of a reliable result, as explained above, an "OK-qualified-result" 702 only contains the output of the neural network 500. In case of a result of the neural network 500, which has to be observed, according to the description above, an according "observe-qualified-result" 704 contains the output result of the neural network 500 together with a warning information, that the image-information should be observed. In case of a not reliable result of the neural network 500 according to the description above, only a warning information 706 is output as a "warning-qualified-result" 706 to the HMI 340. Such warning information can e.g. contain the information, that the image quality is too bad to perform a reliable image recognition with the neural network 500.

In this example, the output vector 590 produced by the neural network 500 is an example of an ML-result according to the present description, the monitoring result 690 produced by the monitoring component 600 is an example for a ML-result-reliability-information according to the present description and the qualified result 700, 702, 704, 706 produced by the postprocessing component 490 is an example for a qualified-ML-result according to the present description.

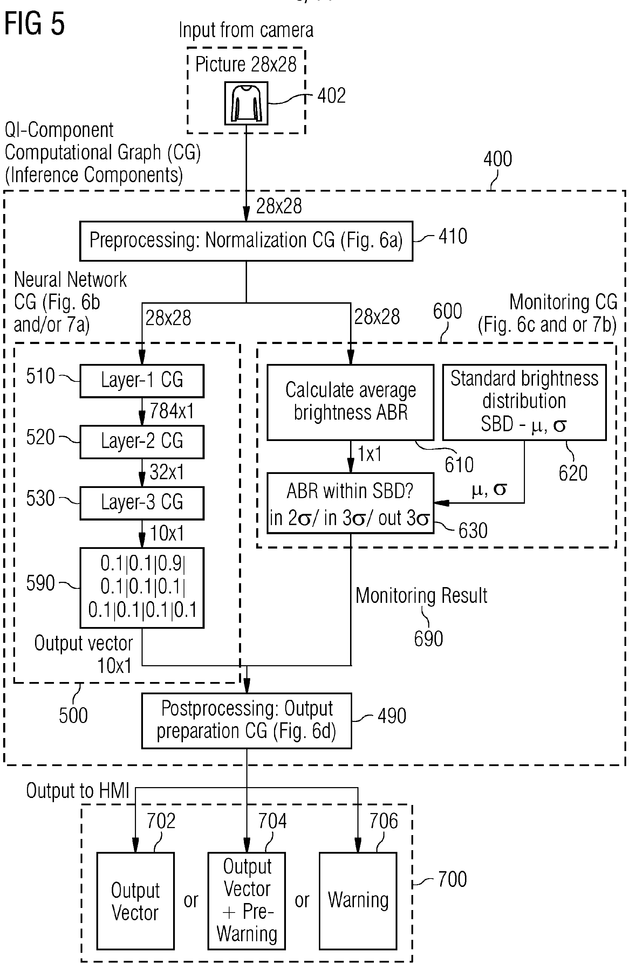

In figure 5, an embodiment of the quality inspection component 400 according to figure 4 as a single computational graph 400 is shown. Corresponding subgraphs of this computational graph 400 are a preprocessing subgraph 410, a neural network subgraph 500, a monitoring subgraph 600 as well as a postprocessing subgraph 490. Those subgraphs 410, 500, 600, 490 are computational graphs on their own, which are connected to each other to build up the quality inspection component computational graph 400 as a single computational graph according to the present description.

To better understand the functionality of the quality inspection component computational graph 400, a size of the data flowing through the computational graph 400 is shown next to most arrows connecting different elements of the quality inspection computational graph 400.

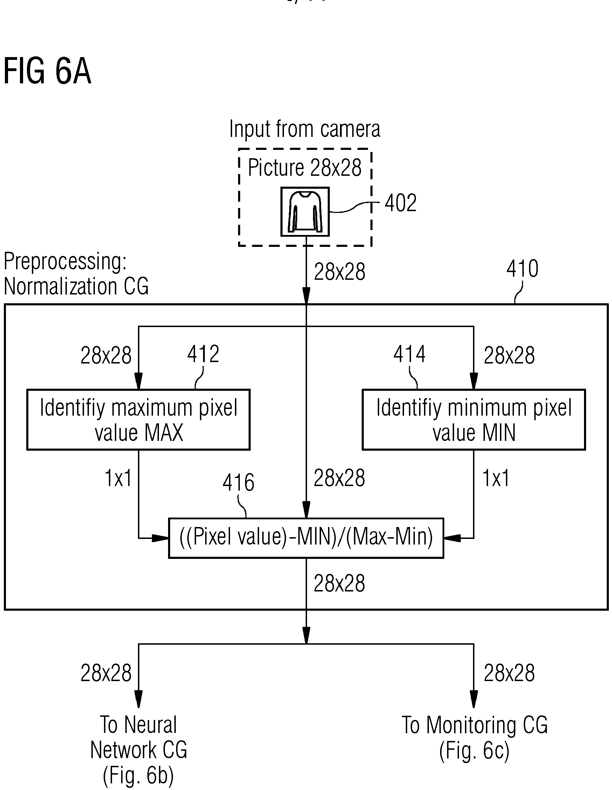

A grayscale picture 402, with the size of 28x28 pixels, is transferred from the camera 360 to the quality inspection component computational graph 400. This grayscale picture 402 is transferred to the preprocessing computational graph 410 of the quality inspection component computational graph 400, where the values of the $28 \times 28$ pixels are transferred into a range between 0 and 1 to result in a normalized image 402. Further details of this preprocessing computational graph 110 are shown in figure 6a.

The preprocessed image 402 is then fed into a neural network computational graph 500. The neural network 500 consists of three layers 510, 520, 530, each again being realized as computational subgraphs 510, 520, 530 in figure 5. After inputting the normalized image 402 into the first layer 510 of the neural network 500 and processing it afterwards through a second layer 520 and third layer 530, the output vector 590 is produced as a result of the processing in the third layer 530.

The neural network 500 is designed and set up in a way, that it can recognize a correct and an incorrect version of five different products respectively, resulting in an output vector of the size 10.

In the first layer computational graph 510 of the neural network 500, the image 402 of the size of $28 \times 28$ pixels is vectorized into a vector of the dimension $784 \times 1$.

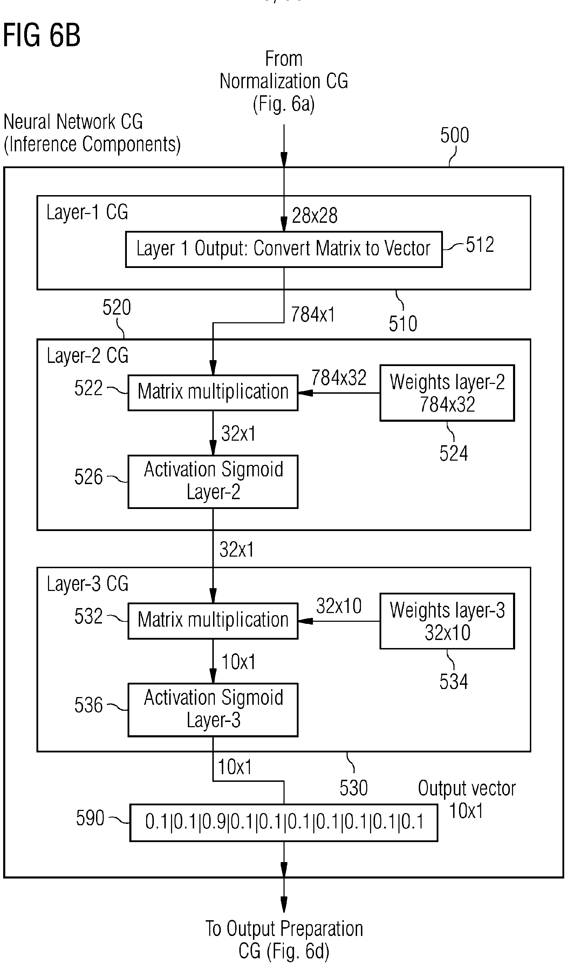

In the second layer computational graph 520 of the neural network 500, which consists of 32 neural network nodes, an output vector of the dimension 32×1 is produced and transferred to the third layer computational graph 530, which consists of 10 neural network nodes. The output of this third layer computational graph 530 is the named output vector 590 of the size 10×1, which is then fed into a postprocessing computational graph 490. The neural network computational graph 500 is explained and described in more detail in connection to figure 6b for inference and 7a for training purposes.

The quality inspection component computational graph 400 further comprises the monitoring component 600 as a monitoring component computational graph 600 or monitoring computational graph 600. This monitoring computational graph 600 also receives the normalized image 402 and calculates an average brightness value ABR of the 28×28 pixels in a "calculate average brightness" computational graph 610.

The monitoring computational graph 600 further comprises a standard brightness component 620 comprising a mean brightness (Mu or $\mu$) and a standard deviation (Sigma or $\sigma$) regarding a standard brightness distribution, brightness probability density function or Gaussian distribution function:

$$f(x) = \frac{1}{\sigma\sqrt{2\pi}} e^{-\frac{(x-\mu)^2}{2\sigma^2}},$$

fitted to the average brightness values of the images used for training the neural network 500.

In a reliability information creation computational subgraph 630 of the monitoring computational graph 600, it is checked, whether the calculated average brightness of the normalized image 402 is

- within the double standard deviation (2xSigma or 2a) around the mean value (Mu or $\mu$) of the standard brightness distribution,
- within an extended range of 3xSigma (or $3\sigma$) of the standard brightness distribution around Mu (or $\mu$),
- or outside of the three Sigma deviation of the standard brightness distribution around Mu.

The first case results in the "reliable result" according to the present description, the second case corresponds to the "still reliable result, which has to be observed" according to the present description and the third case corresponds to a "not reliable result" according to the present description. These respective results are then transferred as monitoring result 690 to the postprocessing computational graph 490.

The postprocessing computational graph then produces the qualified result 700, 702, 704, 706 as previously described.

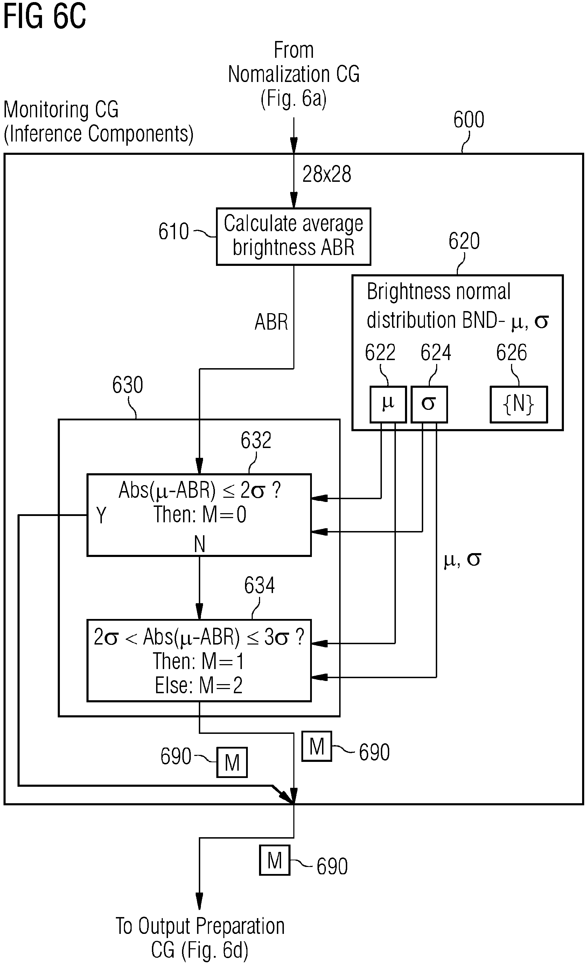

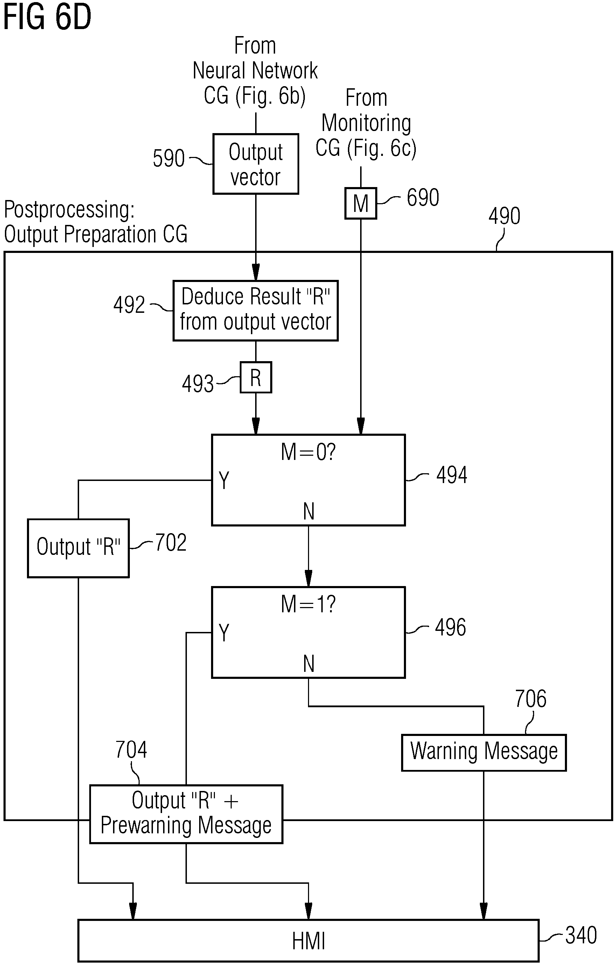

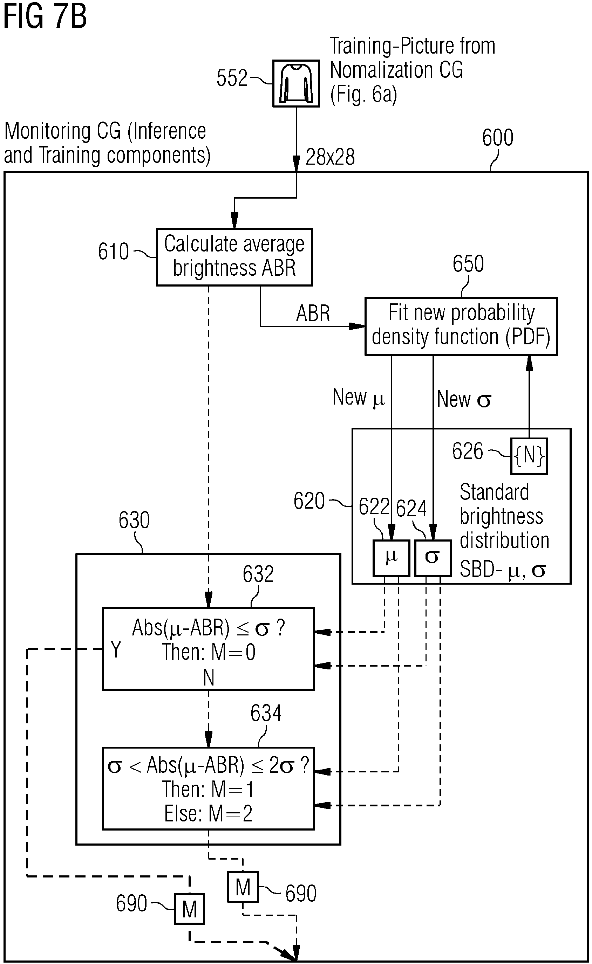

The monitoring computational graph 600 is described in more detail in connection to figure 6c regarding inference, and figure 7b regarding training. The postprocessing computational graph 490 is described in more detail in connection to figure 6d.

Figure 6a shows the preprocessing subgraph 410, already shown in figure 5, in more detail.

The preprocessing computational graph 41 is a normalization computational graph 410 for normalizing the pixel values of the input picture 402. The input picture 402 has 28×28 pixels, each pixel being represented by a numerical value according a gray color tone of this pixel. In a first node 412 of the normalization computational graph 410, the maximum value MAX of all pixel values of the image 402 is estimated. In parallel, the input picture 402 is also input in a second note 414 determining a minimum pixel value MIN of all pixels of the image 402.

This first 412 and second node 414, as well as the input image 402 itself, are then connected to a third node 416 of the normalization computational graph 410, which calculates for each pixel of the input image 402 a normalized grayscale value. The output of the normalization computational graph 410 or preprocessing computational graph 410 is then also and 28×28 image 402, but with normalized grayscale values between 0 and 1.

This normalized or preprocessed input picture 402 is then transferred to the neural network computational graph 500 and the monitoring computational graph 600, which are shown in figure 6b and 6c, respectively, in more detail.

Before explaining the neural network computational graph 500 shown in figure 6b in more detail, first some general remarks are made below regarding the representation of a neural network as computational graph.

A neural network layer that receives an input from a previous layer can use a parameter matrix to perform a matrix multiplication between the parameter matrix and the input. In regular cases, this matrix multiplication is a representation of multiple neural network nodes in the computational graph. For example, a matrix multiplication can be divided into multiple multiplication and addition operations, and each operation can be represented again by a different node in the computational graph. The operation represented by each node can generate a respective output, which flows on a directed edge to a subsequent node. After the operation represented by a final node generates a result of the matrix multiplication, the result flows, on a directed edge, to another node. The result is equivalent to an output of the neural network layer that performs the matrix multiplication.

In some other cases, the matrix multiplication is represented as one node in the graph. The operations represented by the node can receive, as inputs, an input tensor on a first directed edge and a weight tensor, e.g., a parameter matrix, on a second directed edge. The node can process, e.g., perform a matrix multiplication of, the input and weight tensors to output, on a third directed edge, an output tensor, which is equivalent to an output of the neural network layer.

Other neural network operations that may be represented by nodes in the computational graph include other mathematical operations, e.g., subtraction, division, and gradient computations; array operations, e.g., concatenate, splice, split, or rank; and neural network building block operations, e.g., SoftMax, Sigmoid, rectified linear unit (ReLU), or convolutions.

Computational graphs ease the training of neural networks with gradient descent algorithm making them many times faster than traditional implementation of neural networks. Computational graphs have also found applications in weather forecasting by reducing the associated computation time. Its strength is fast computation of derivatives. It is known also by a different name of "reverse-mode-differentiation" or "backpropagation".

Figure 6b shows in more detail the neural network computational graph 500 consisting of three neural network layers 510, 520, 530.

The first neural network layer 510 is a so-called "flattening" layer 510, which converts the 28×28 preprocessed input image 402 into a vector of the size 784×1, which is then transferred to the layer-2 computational subgraph 520 of the neural network computational graph 500.

This vector is then transferred to the second neural network layer 520 which consists of 32 neural network nodes. Here in this example, computational graphs and especially neural network computational graphs will not be explained in detail. The computational graph and especially neural network computational graph are designed and set up according to prior art, which is known from the literature (e.g., "Make Your Own Neural Network", Tariq Rashid, CreateSpace Independent Publishing Platform, 2016, ISBN-13: 978-1530826605). In the example shown here, simplified versions of neural network layers are used, in which no bias-values for the different nodes of the neural network layers are considered. This simplification gives still correct results and makes the according figures less complex.

The layer-2 subgraph 520 shown in figure 6b contains a weights matrix 524 of the size 784×32 containing the weights assigned to the second layer computational subgraph 520. In a matrix multiplication node 522 of the layer-2 computational graph, the input vector coming from layer 1 is multiplied with the weights metrix 524 in an according multiplication node 522, which results in an output vector of dimension 32×1 going into an activation node 526 of the layer-2 computational graph 520. Here the vector output from the matrix multiplication node 522 is multiplied with the sigmoid function $S(x)=1/(1+e^{(-x)})$ as activation function.

After applying the activation function in the according note 526 of the layer-2 computational graph 520, the output vector ASL2 of the layer-2 computational graph 520 of the dimension 32×1 is transferred to the layer-3 computational graph 530.

Layer 3 530 of the neural network computational graph 500 contains 10 neural network nodes. The layer-3 computational graph 530 comprises a weights matrix node 534 containing a weights matrix of the dimensions 32×10. In a matrix multiplication node 532, the input vector ASL2 of the layer-3 computational graph is multiplied with the weights matrix from the weights node 534, which results in a vector of the dimensions 10×1.

This vector is then transferred to an activation node 536 of the layer-3 computational graph 530 to multiply the vector with the sigmoid activation function named above. The result of this multiplication is an output vector ASL3 590 of the neural network computational graph 500, which is then further transferred to the postprocessing or output preparation computational subgraph 490, which is in further detail explained regarding figure 6d.

The output vector ASL3 590 of the neural network computational graph 500 is a vector of the dimensions 10×1. The neural network computational graph 500 or the neural network 500 is trained to detect five different products, each product in a correctly produced version and an incorrectly produced version. The 10 different product-versions, the neural network 500 can detect, correspond to positions inside the output vector 590. The product-version recognized by the neural network 500 correspond then to a value close to 1 in an according position of the output vector 590. In the example shown in figure 6b, a product-version according to the third position in the output vector 590 is recognized by the neural network 500. This can for example be related to a correctly produced version of product number 2. Product-versions not recognized by the neural network 500 correspond to a value close to zero in the neural network output vector 590.

Figure 6c shows a detailed version of the monitoring computational subgraph 600.

The preprocessed input image 402 coming from the preprocessing computational subgraph 410, is input into a "average brightness calculator"-node 610 of the monitoring computational subgraph 600, which calculates an average brightness value of the normalized input image 402. This can e.g. be performed by calculating an average value of all 28×28 grayscale-values of the normalized input picture 402. This average brightness value is then forwarded to a "reliability information creation" computational subgraph 630 for the creation of a reliability information "M" regarding the input picture 402 and/or the according output vector 590 estimated by the neural network 500.

In general, the reliability information creation computational subgraph 630 works in a way, that a normal distribution function is fitted to the average brightness values of each of the preprocessed normalized training pictures used for the training of the neural network computational graph 500. Such normal distribution function (also named as Gaussian distribution function) (see above) has a mean value Mu (= $\mu$) 622 and a standard the deviation Sigma (= $\sigma$) 624. After setting up the monitoring computational graph 600 with the training images used to train the neural network computational graph 600, the determined Mu (= $\mu$) 622 and Sigma (= $\sigma$) 624 are stored in the normal distribution node 620 of the monitoring computational subgraph 600 together with a complete collection of all the brightness values (= {N}) 626 used to determine the normal distribution used for monitoring.

The first case M=0 results in the "reliable result" according to the present description, the second case M=1 corresponds to the "still reliable result which has to be observed" according to the present description and the third case M=2 corresponds to a "not reliable result" according to the present description.

If the average brightness value of the normalized input picture 402 calculated by the average brightness calculation notes 610 is in a range between Mu - 2xSigma and Mu + 2xSigma, the brightness value of the normalized input picture 402 is considered to be well in the range of the brightness values of the picture used for training the neural network 500, and the result produced by the neural network 500 after inputting the according normalized image 402 into the neural network 500 is considered to be reliable. In this case a value of 0 is assigned to a quality indicator variable "M" 690.

If the average brightness value of the normalized inputs picture 402 is in the range between mu - 2xSigma and mu - 3xSigma or mu + 2xSigma and mu + 3xSigma, the results produced by the neural network 500 after inputting the normalized image 402 into the neural network 500 is considered to be still reliable but has to be observed. In this case a value of 1 is assigned to the quality indicator variable "M" 690.

If the average brightness value of the average brightness value of the normalized input picture 402 is larger than mu + 3xSigma or smaller than mu - 3xSigma, then the average brightness of the image 402 is considered to be outside the range of the average brightnesses of the images used for training the neural network 500 and the output result 590 after inputting the normalized image 402 into the neural network 500 is considered to be not reliable. In this case a value of 2 is assigned to the quality indicator "M" 690.

These assignment steps of the numbers 0, 1 or 2 to the quality indicator variable "M" 690 is done in two nodes 632, 634 within the reliability information creation computational subgraph 630 of the monitoring computational graph 600 as shown in figure 6c. The value of the quality indicator variable "M" 690 is then output to the postprocessing or output preparation computational subgraph 490 of the quality inspection component computational graph 400.

Figure 6d shows a detailed view of the postprocessing or output preparation computational subgraph 490 of the quality inspection component computational graph 400.

From the neural network computational graph 500 the output vector 590 is transferred to the postprocessing computational graph 490 and is fed into a result-deduction-node 492 of the postprocessing computational subgraph 490. This result-deduction-node 492 is designed and set up to decode the output vector 590 to receive a recognized product information "R" 493, e.g. in the current example, that product #2 in a correctly produced version has been recognized. This recognized product information "R" 493 is then forwarded to a first decision node 494.

The quality indicator variable "M" 690 is transferred from the monitoring computational subgraph 600 also to the postprocessing subgraph 490, and also input into the first decision node 494. The first decision node 494 is designed and set up in a way, that the "okay-qualified-result" 702, containing the recognized product information "R" 493, is output to the HMI 340, if the quality indicator variable "M" 690 has the value 0.

If the quality indicator variable "M" 690 contains a value of 1 or 2, "M" 690 is forwarded to a second decision node 496 of the postprocessing computational subgraph 490. This second decision node 496 is designed and set up in a way, that the "observe-quality-result" 704 containing the recognized product information "R" 493 together with a warning information, that the image-information should be observed, is output to the HMI 340, if the quality indicator variable "M" 690 has a value of 1. The second decision node 496 is additionally designed and set up in a way, that the "warning-qualified-result" 706, containing the warning information, that the output of the neural network 500 is not reliable, is output to the HMI 340, if the quality indicator variable "M" 690 has a value of 2.

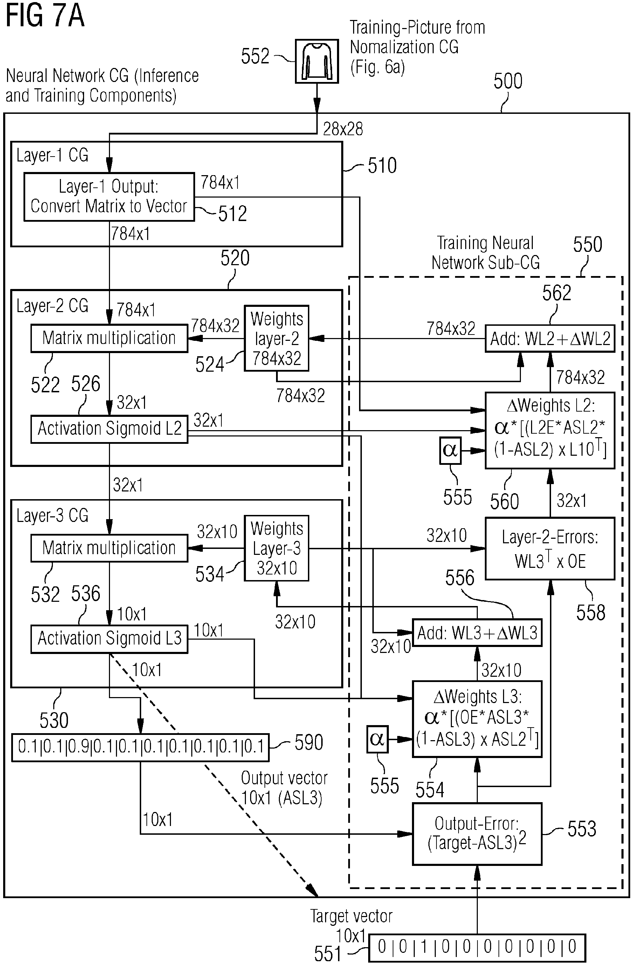

Figure 7a shows a version of the neural network computational graph 500 comprising inference and training components. The components 510, 520, 530 of the neural network computational graph 500 necessary for inference have already been explained in connection with figure 6b. These components of the neural network computational graph 500 are the layer-1 computational graph 510, the layer-2 computational graph 520 and the layer-3 computational graph 530.

The neural network computational graph 500 shown in figure 7a additionally comprises a computational subgraph 515, containing components for training the neural network 500, by adding a training-functionality to the neural network computational graph 500. For training of the neural network 500, a normalized training picture 552 is input into the neural network computational graph 500 and an inference result output vector 590 is created by processing this training input picture 552 through the layers 1, 2 and 3, 510, 520, 530. The normalized training picture 552 is thereby build up in the same way than the normalized image 402 used for inference in the embodiment shown in figure 6b.

In the following, the training process is briefly described, but not explained in detail. The training is performed according to principles well-known from prior art and e.g. described in "Make Your Own Neural Network", Tariq Rashid, CreateSpace Independent Publishing Platform, 2016, ISBN-13: 978-1530826605 or comparable literature.

The training procedure used to train the neural network 500, is a so-called supervised learning using labeled training data. Therefore, a target output vector 551 is assigned to the training picture 552, whereby this target vector 551 shows a planned result which should be achieved after inputting the training image 552 into the neural network computational graph 500.

The training image 552 and the according planned result 551 are an example of training data according to the present description.

As already explained, the output vector 590, as shown in figure 7a, is created after inputting the normalized training picture 552 into the inference components of the neural network computational graph 510, 520, 530. This output vector 590 is then entered into an output error calculation node 553 together with the target vector 551 assigned to the training picture 552. By subtracting the output vector 590 from the target vector 551, and multiplying the difference by itself, an output error value OE is calculated by the output error calculation node 553.

This output error OE is then passed to a layer-3-Delta-weights-node 554 for calculating the changes in layer-3-weights $\Delta$WL3 due to the current training step. For this purpose, also the output vector ASL3 590 and a learning rate Alpha (= $\alpha$) 555 are entered into this layer-3-Delta weights-node 554. The changes in layer-3-weights $\Delta$WL3 554 are then calculated according to the prior art named above. In a create-new-layer-3-weights-node 556, new layer-3-weights WL3 534 are calculated from the Delta-weights $\Delta$WL3 554 and the previous layer-3-weights WL3 534.

To also calculate the changes in the layer 2 weights WL2, the output error OE 553 is also forwarded to a layer-2-error-node 558, to calculate layer-2-errors L2E 558 by additionally using the layer 3 weights WL3 534. In a next step, the layer-2-errors L2E 558 are forwarded to a calculate-layer-2-weight-changes-node $\Delta$WL2 560 for calculating the changes of layer 2 weights in the current training step, by additionally using the output of the layer 2 computational graph ASL2 520, the output of the layer 1 computational graph L1O 510 and the learning rate Alpha (= $\alpha$). The calculation is also done according to the literature named above. In a create-new-layer-2-weights-node 562, new layer-2-weights WL2 524 are calculated by adding the previous layer-2-weights WL2 524 and the layer-2-weight changes $\Delta$WL2 562.

To receive the trained neural network computational graph 500, this procedure is usually be performed with several training pictures 552 and accordingly assigned target vectors 551.

Figure 7b shows the monitoring computational graph 600 with inference and training components. The inference components 610, 620, 630 have been already explained with respect to figure 6c. To also adapt the monitoring computational graph 600 to the training picture 552 used for training of the neural network computational graph 500, the training picture 552 is also input into the monitoring computational graph 600 by entering it into an average brightness calculation node 610 to calculate the average brightness ABR of the training picture 552.

For accordingly adapting the monitoring computational graph 600 to this training picture 552, a new standard brightness distribution (see above) is created with a fitting node 650. The fitting node 650 uses the average brightness ABR of the training picture 552 together with the collection of brightnesses {N} 626, used for estimating the current standard brightness distribution 622, to fit a new standard brightness distribution (see above) to this newly assembled brightness data (ABR+{N}).

After fitting this new standard brightness distribution 620, the newly estimated mean values Mu (= $\mu$) 622 and standard deviation Sigma (= $\sigma$) 624 are stored in the standard brightness distribution node 620.

In the figures 7a and 7b the dataflow used for inference of the neural network 500 and monitoring 600 respectively, is respectively shown by dashed arrows.

A quality inspection component 400 can for example consist of the preprocessing computational graph 410 according to figure 6a and the postprocessing computational graph 490 according to figure 6d together with the neural network computational graph 500 according to figure 7a and the monitoring computational graph 600 according to figure 7b. In this case, such quality inspection component computational graph 400 can e.g. be deployed and/or used in an according controller 300.

This embodiment has the advantage, that the according quality inspection component 400 can be directly used for example for re-training with new training data, because it contains also the training components for the neural network computational graph 500 as well as those for the monitoring computational graph 600. This embodiment has the disadvantage, that such quality inspection component computational graph 400 can e.g. need improved hardware performance also for inference due to the additional training components.

In an alternative embodiment, a quality inspection component 400 can for example comprise the preprocessing computational graph 410 according to figure 6a and the postprocessing computational graph 490 according to figure 6d together with the neural network computational graph 500 according to figure 6b and the monitoring computational graph 600 according to figure 6c, the latter two ones only consisting of the respective components necessary for inference. This embodiment has the advantage, that it needs less powerful hardware than needed for the embodiment described before. But it has the disadvantage, that re-training of the neural network computational graph 500 and the monitoring computational graph 600 has to be performed with separate versions of the neural network computational graph 500 and/or monitoring computational graph 600. Such separate version of the neural network computational graph 500 can be designed and set up e.g. according to figure 7a, and such a separate version of the monitoring computational graph 600 can designed and set up e.g. according to figure 7b.

In this second embodiment, a deployment or construction of a quality inspection component 400 can be e.g. performed in the way described below.

For training the neural network computational graph 500, a neural network computational graph 500 according to figure 7a is used. For training the monitoring computational graph 600, a monitoring computational graph according to figure 7b is used. Then in a following compilation and/or optimization process according to the present description, the components of the neural network computational graph 500 only needed for training 550, are removed from the neural network computational graph 500, and the components for fitting the new probability density function 650 of the monitoring computational graph 600, which is also only needed for training, is removed from the monitoring computational graph 600.

Then the neural network computational graph 500 and monitoring computational graph 600 are connected to the preprocessing computational graph 410 for inputting data, and to the postprocessing computational graph 490 for outputting data. In this way, a quality inspection component computational graph 400 is built up as a single connected computational graph optimized for inference. Such quality inspection component computational graph 400 can then be deployed and/or used in an according controller 300.

If the quality inspection component computational graph 400 has to be retrained with new training data or training pictures 402, this process has to be followed again by again training the neural network computational graph 500 according to figure 7a and the monitoring computational graph 600 according to 7b used before, with the new training data 552.

Then the quality inspection computational graph 400 adapted for inference has again to be built according to the previous description.

The previously described steps to create the quality inspection computational graph 400 from a training neural network computational graph 500 and a training monitoring computational graph 600 can be generally applied, independent, whether the resulting quality inspection computational graph 400 is optimized for inference and/or has still training capabilities. This construction or built process can additionally comprise optimization steps to further optimize the performance of a deployed quality inspection computational graph 400. Such optimization can for example also comprise a distribution of the quality inspection computational graph 400 on two or more hardware devices, processors or processor cores - or prepare the computational graph 400 for such distribution.

All kinds of quality inspection computational graphs 400 described in the embodiments, described in the present description, are examples of computer program products according to the present description. All embodiments of quality inspection computational graphs 400 described in the present description are single and/or fully connected computational graphs according to the present description.

**Claims**

1. Computer program product (100, 400) for analyzing data originating from at least one device (360), the computer program product (100, 400) comprising

   - a ML-artifact (120, 500) comprising the functionality of a ML-model, and
   - a monitoring-artifact (130, 140, 600),

      whereas the ML-model has been trained and/or set up, or can be trained and/or set up, with a machine learning method, whereas the ML-artifact (120, 500) is designed and setup to produce a ML-result (122, 590) as a response of inputting input-data (102, 402, 552), based on data originating from the at least one device (360), into the ML-artifact (120, 500), whereas the monitoring-artifact (130, 140, 600) is designed and set up to produce a ML-result-reliability-information (132, 142, 690) regarding the ML-result (122, 590) as a response of inputting the input-data (102, 402, 552) into the monitoring-artifact (130, 140, 600),
      and whereas the computer program product (100, 400) is further designed and setup to output a qualified-ML-result (190, 702, 704, 706) based on the ML-result (122, 590) and the ML-result-reliability-information (132, 142, 690) when being executed by a computer (300, 400).

2. A computer program product according to claim 1, **characterized in,**

      **that** the ML-artifact (120, 500) is designed and setup for training the ML-model based on training data (551, 552), or for being able to train the ML-model based on the training data (551, 552), and/or that the monitoring-artifact (130, 140, 600) is designed and setup for training itself based on training data (551, 552), or for being able to train itself based on the training data (551, 552).

3. A computer program product according to claim 2, **characterized in,**
   **that** after training or setting-up the ML-artifact (120, 500) and the monitoring-artifact (130, 140, 600) based on the training-data (551, 552), the trained ML-artifact (120, 500) and the trained or amended monitoring-artifact (130, 140, 600) are combined into the computer program product (100, 400) .

4.	A computer program product according one of the preceding claims, **characterized in,** **that** the ML-artifact (120, 500) and the monitoring-artifact (130, 140, 600) are executed in a single program run or cycle, if the computer program product (100, 400) is run on a computer (300, 400).

5.	A computer program product according one of the preceding claims, **characterized in,** **that** the computer program product (100, 400) is designed or set up as a single artifact (400).

6.	A computer program product according one of the preceding claims, **characterized in,**

    **that** the computer program product (100, 400) comprises a computational graph (400), comprising both, the ML-artifact (120, 500) and the monitoring-artifact (130, 140, 600), or, **that** it is possible to realize one single computational graph (400) comprising both, the ML-artifact (120, 500) and the monitoring-artifact (130, 140, 600), whereas the single computational graph (400) is part of the computer program product.

7.	A computer program product according one of the preceding claims, **characterized in,**

    **that** the computer program product (100, 400) further comprises a preprocessing-artifact (110, 410) to convert the data from the at least one device (102, 402, 552) into the input-data, and/or **that** the computer program product further comprises a postprocessing-artifact (150, 490) to generate the qualified-ML-result (190, 702, 704, 706).

8.	A computer program product according to claim 6 and 7, **characterized in,** **that** the single computational graph (400) comprises the preprocessing-artifact (110, 410) and/or the postprocessingartifact (150, 490).

9.	Computer implemented method for producing a qualified output (190, 702, 704, 706) of an ML-model, based on data originating from at least one device (360), comprising the steps:

    - inputting input-data (102, 402, 552), based on the data origination from the at least one device (360), into a ML-artifact (120, 500), comprising the functionality of the ML-model, to produce a ML-result (122, 590),
    - inputting the input-data (102, 402, 552) in a monitoring-artifact (130, 140, 600) to produce a ML-result-reliability-information (132, 142, 690),
    - outputting a qualified-ML-result (190, 702, 704, 706) based on the ML-result (122, 590) and the ML-result-reliability-information (132, 142, 690),

    whereas the method steps of inputting input-data (102, 402, 552) into the ML-artifact (120, 500), inputting the input-data (102, 402, 552) in the monitoring-artifact (130, 140, 600) and outputting a qualified-ML-result (190, 702, 704, 706) based on the ML-result (122, 590) and the ML-result-reliability-information (132, 142, 690) are performed in a single run of a computer program product (100, 400) when run on a computer (300, 400).

10.	Computer implemented method for producing a trained ML-model (120, 500) and/or ML-artifact (120, 500) and a trained or amended monitoring artifact (130, 140, 600) based on training-data (551, 552), comprising the steps:

    - inputting training-data (551, 552) into a ML-artifact (120, 500), comprising the functionality of a ML-model, to produce a trained ML-artifact (120, 500),
    - inputting the training-data (551, 552) into a monitoring-artifact (130, 140, 600) to produce a trained or amended monitoring-artifact (130, 140, 600),

    whereas the method steps of inputting the training-data (551, 552) into the ML-artifact (120, 500) and inputting the training-data (551, 552) in the monitoring-artifact (130, 140, 600), as well as producing the trained ML-artifact (120, 500) and the trained or amended monitoring-artifact (130, 140, 600), are performed in a single run of a computer program product (100, 400) when run on a computer (300, 400).

11.	Computer implemented method according to claim 10, **characterized in,** **that** after training and/or amending the ML-artifact (120, 500) and the monitoring-artifact (130, 140, 600) based on the training-data, the trained ML-artifact (120, 500) and the trained or amended monitoring-artifact (130, 140, 600) are combined into the computer program product (100, 400).

12.	Computer implemented method according to one of the claims 9 to 11,

**characterized in,**

> **that** the computer program product (100, 400) comprises the ML-artifact (120, 500) and the monitoring-artifact (130, 140, 600) as one single computational graph (400),
> or that the computer program product (100, 400) is realized as a single artifact (400).

13. Computer implemented method according to one of the claims claim 9 to 12,
**characterized in,**
**that** the computer program product (100, 400) is designed and set up as a computer program product (100, 400) according one of the claims 1 to 8.

# FIG 1

# FIG 2

Deployment — 252

Model Conversion — 250

Model Merging — 240

220

Training of AI Function

Training of Monitoring — 230

Featureizing — 218

Data Labelling — 216

Pre-Processing — 214

Data Validation — 212

Data Input — 210

# FIG 3

300

Controller

| Internal Bus | 301 |

302  304  400

| CPU-Component | IO-Component | Quality Inspection (QI) -Component |

342  352  362

HMI — 340

360

350

# FIG 4

Input from Camera

Picture 28x28

402

Quality
Inspection (QI) Component

400

Preprocessing — 410

500 — Neural Network:
Image
Recognition

Monitoring:
Brightness
Monitoring — 600

Output vector

Monitoring Result

590

690

Postprocessing:
Output preparation — 490

Output to HMI

702

704

706

Output
Result

or

Output
Result
+ Pre-
Warning

or

Warning

700

# FIG 5

Input from camera

Picture 28x28

402

QI-Component
Computational Graph (CG)
(Inference Components)

400

28x28

Preprocessing: Normalization CG (Fig. 6a) — 410

Neural Network
CG (Fig. 6b
and/or 7a)

28x28

28x28

600

Monitoring CG
(Fig. 6c and or 7b)

510 — Layer-1 CG

784x1

520 — Layer-2 CG

32x1

530 — Layer-3 CG

10x1

590 — 0.1|0.1|0.9|
0.1|0.1|0.1|
0.1|0.1|0.1|0.1

Output vector
10x1

Calculate average
brightness ABR

Standard brightness
distribution
SBD - μ, σ

1x1

610

620

ABR within SBD?
in 2σ/ in 3σ/ out 3σ

μ, σ

630

Monitoring Result

690

500

Postprocessing: Output
preparation CG (Fig. 6d) — 490

Output to HMI

702

704

706

Output
Vector

or

Output
Vector
+ Pre-
Warning

or

Warning

700

# FIG 6A

Input from camera

Picture 28x28

402

Preprocessing:
Normalization CG

410

28x28

28x28 412
Identifiy maximum pixel value MAX

414 28x28
Identifiy minimum pixel value MIN

1x1 416 28x28
((Pixel value)-MIN)/(Max-Min)

1x1

28x28

28x28
To Neural Network CG (Fig. 6b)

28x28
To Monitoring CG (Fig. 6c)

30

# FIG 6B

From
Normalization CG
(Fig. 6a)

Neural Network CG
(Inference Components)

500

**Layer-1 CG**

28x28

Layer 1 Output: Convert Matrix to Vector — 512

510

520

784x1

**Layer-2 CG**

522 — Matrix multiplication ← 784x32 — Weights layer-2 784x32

524

32x1

526 — Activation Sigmoid Layer-2

32x1

**Layer-3 CG**

532 — Matrix multiplication ← 32x10 — Weights layer-3 32x10

534

10x1

536 — Activation Sigmoid Layer-3

10x1

530

Output vector 10x1

590 — 0.1|0.1|0.9|0.1|0.1|0.1|0.1|0.1|0.1|0.1

To Output Preparation
CG (Fig. 6d)

# FIG 6C

From
Nomalization CG
(Fig. 6a)

Monitoring CG
(Inference Components)

600

28x28

610 — Calculate average
brightness ABR

620

Brightness normal
distribution BND- $\mu$, $\sigma$

622      624      626

| $\mu$ | $\sigma$ | {N} |

ABR

630

632

Abs($\mu$-ABR) $\leq 2\sigma$ ?
Y          Then: M=0
N

$\mu$, $\sigma$

634

$2\sigma <$ Abs($\mu$-ABR) $\leq 3\sigma$ ?
Then: M=1
Else: M=2

690 — M          M — 690

M — 690

To Output Preparation
CG (Fig. 6d)

# FIG 6D

From
Neural Network
CG (Fig. 6b)

From
Monitoring
CG (Fig. 6c)

590 — Output vector

M — 690

Postprocessing:
Output Preparation CG

490

492 — Deduce Result "R" from output vector

493 — R

M=0?

Y

N

494

Output "R" — 702

M=1?

Y

N

496

706

704

Warning Message

Output "R" + Prewarning Message

HMI

340

# FIG 7A

Training-Picture from
Nomalization CG
(Fig. 6a)

552

500

Neural Network CG (Inference
and Training Components)

28x28

Layer-1 CG

510

Layer-1 Output:
Convert Matrix to Vector    784x1

512

784x1

520

Training Neural
Network Sub-CG    550

562

Layer-2 CG    784x1

784x32    Weights
layer-2
784x32    784x32    Add: WL2+ΔWL2

Matrix multiplication

524

522    526    784x32    784x32

32x1

Activation Sigmoid L2    32x1    ΔWeights L2:
$\alpha*[(L2E*ASL2*$
$(1-ASL2) \times L10^T]$

α

555    560    32x1

32x1

Layer-3 CG

32x10    Weights
Layer-3
32x10    32x10    Layer-2-Errors:
$WL3^T \times OE$

Matrix multiplication

534

532    536    556

10x1    32x10    558

Activation Sigmoid L3    10x1    Add: WL3+ΔWL3

10x1

530    32x10

ΔWeights L3:
$\alpha*[(OE*ASL3*$
$(1-ASL3) \times ASL2^T]$

0.1|0.1|0.9|0.1|0.1|0.1|0.1|0.1|0.1|0.1    590

α

Output vector
10x1 (ASL3)    555    554

10x1

Output-Error:
$(Target-ASL3)^2$    553

Target vector

10x1

551    | 0 | 0 | 1 | 0 | 0 | 0 | 0 | 0 | 0 | 0 |

# FIG 7B

552 ⌐

Training-Picture from
Nomalization CG
(Fig. 6a)

Monitoring CG (Inference
and Training components)

600

28x28

610 ⌐ Calculate average
brightness ABR

650

ABR → Fit new probability
density function (PDF)

New μ    New σ

626 ⌐ {N}

620 ⌐ | 622 | 624

Standard
brightness
distribution
SBD- μ, σ

μ    σ

630

632

Abs(μ-ABR) ≤ σ ?
Then: M=0
N

Y

634

σ < Abs(μ-ABR) ≤ 2σ ?
Then: M=1
Else: M=2

690 ⌐ M

M ⌐ 690

Europäisches
Patentamt

European
Patent Office

Office européen
des brevets

# EUROPEAN SEARCH REPORT

**Application Number**

EP 22 18 3516

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MENA JOSE ET AL: "Uncertainty-Based Rejection Wrappers for Black-Box Classifiers", IEEE ACCESS, [Online] vol. 8, no. 17, 10 June 2020 (2020-06-10), pages 101721-101746, XP093004232, DOI: 10.1109/ACCESS.2020.2996495 Retrieved from the Internet: URL:https://ieeexplore.ieee.org/ielx7/6287 639/8948470/09097854.pdf?tp=&arnumber=9097 854&isnumber=8948470&ref=aHR0cHM6Ly9pZWVle HBsb3JlLmllZWUub3JnL2RvY3VtZW50Lzkw0Tc4NTQ => [retrieved on 2022-12-01] * sections III.A and IV; figure 1 * ───── | 1-13 | INV. G06N3/02 G06N3/08 G06N3/04 G06N20/00 |
| A | Prasad Ashwin: "How Anomaly Detection Works ?", , 31 July 2020 (2020-07-31), XP093004231, Retrieved from the Internet: URL:https://medium.com/analytics-vidhya/ho w-anomaly-detection-works-4651f1786431 [retrieved on 2022-12-01] * the whole document * ───── -/-- | 1-13 | TECHNICAL FIELDS SEARCHED (IPC) G06N |

The present search report has been drawn up for all claims

| Place of search | Date of completion of the search | Examiner |
|---|---|---|
| Munich | 2 December 2022 | Thielemann, Benedikt |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

    ........................................................................
& : member of the same patent family, corresponding
    document

EPO FORM 1503 03.82 (P04C01)

**EUROPEAN SEARCH REPORT**

Europäisches
Patentamt
European
Patent Office
Office européen
des brevets

| | Application Number |
|---|---|
| | EP 22 18 3516 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Bahlmann Claus: "Künstliche Neuronale Netze zur optischen Qualitätskontrolle textiler Nähte", Prof. Dr. Helge Ritter Dipl.-Phys. Gunther Heidemann, 31 December 1997 (1997-12-31), XP093004348, Retrieved from the Internet: URL:https://lmb.informatik.uni-freiburg.de/people/bahlmann/data/bahlmann-seams1997.pdf [retrieved on 2022-12-02] * chapter 3 * ----- | 1-13 | |

| | |
|---|---|
| | TECHNICAL FIELDS SEARCHED (IPC) |

The present search report has been drawn up for all claims

| Place of search | Date of completion of the search | Examiner |
|---|---|---|
| Munich | 2 December 2022 | Thielemann, Benedikt |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

**Patent documents cited in the description**

- US 10504020 B2

**Non-patent literature cited in the description**

- **TARIQ RASHID.** Make Your Own Neural Network. CreateSpace Independent Publishing Platform, 2016